# EUROPEAN PATENT APPLICATION

(11) **EP 1 020 858 A1**
(43) Date of publication of application: **19.07.2000**
(21) Application number: 98945589.4
(22) Date of filing: 02.10.1998
(51) Int. Cl.: G11B 20/10, G11B 31/00, G06F 13/00, G06F 3/00, H04N 5/00, H04N 7/00

(54) **CONTROLLER, NETWORK DEVICE, SIGNAL TRANSMITTER, SIGNAL RECEIVER, AND RECORDING MEDIUM**

(30) Priority: 03.10.1997 JP 27119097; 12.12.1997 JP 34304297
(71) Applicant: KABUSHIKI KAISHA TOSHIBA, Kawasaki-shi, Kanagawa-ken 210-8572 (JP)
(72) Inventor: FUJIYOSHI, Yasuhiro, Kanagawa-ken 247-0007 (JP); YASUKI, Seijiro, Kanagawa-ken 235-0022 (JP); SAKAZAKI, Yoshihisa, Kanagawa-ken 244-0003 (JP); SHIMODA, Kenji, Kanagawa-ken 246-0021 (JP); MURAMATSU, Takamichi, Yokohama-shi,Kanagawa-ken 222-0031 (JP)
(74) Representative: HOFFMANN - EITLE
(86) International application number: JP9804461
(87) International publication number: WO9918574

(57) **Abstract**

A device 900 of this invention is operated interactively with network devices 95, 952, 953 so as to control the network devices and also control itself. It includes storing means for storing control information for controlling itself, outputting means for outputting the control information to a different network device via a network 960 after it is connected to the network, and means 906, 920 for performing an operation corresponding to the control information when information for controlling itself is input from the different network device.

## Description

### Technical Field

This invention relates to a control device, network device, signal transmitting and receiving device and recording medium used for digital television broadcasting, network, CATV system and the like and effectively used for a receiving device and a device for multiplexing data on an image and voice and transmitting them.

### Background Art

Recently, with the development of semiconductor technology, and communication technology, television (TV) receivers having highly sophisticated functions are developed. Particularly, the conventional television receiver is a passive device such that the viewer will simply enjoy video and audio signals by watching and listening to them, but it is gradually desired to develop intelligent television receivers which multiplex digital data other than the video and audio signals, add information other than the video and audio signals and permit the viewer to respond to the television program which is now viewed by use of the digital technology. As the TV which realizes the above function, a Compact Graphical Interactive Broadcast Information System (document 1) described in International Application, International Patent Classification: H04N 1/00, International KOKAI Publication No. WO96/34466 made public based on Patent Cooperation Treaty (PCT) is provided. In this document, a method for multiplexing not only the normal video signal but also new data on the TV program and realizing the interactive function is described.

By this method, the interactive function which cannot be attained by the normal TV broadcast can be realized by multiplexing interactive contents on the video and audio signals and transmitting them.

On the other hand, as the method for realizing the interactive function, a method called MHEG-5 described in ISO/IEC 13522-5 (document 2) is provided. In MHEG-5, as in the document 1, an application corresponding to a page which is called a scene is defined and various applications can be constructed by objects. Further, the objects can construct the application by using those which correspond to the resource in the document 1 which is called data contents in the same manner. However, in the interactive system of the document 2, there is no definition of the detail script and a scenario of the application is created by describing the operation of the objects accompanied by occurrence of events.

As described above, the interactive system described in the document 1 and the interactive system described in the document 2 are extremely similar to each other in that constituents called objects are used at the time of creation of the application. However, since the types of the objects which can be used at the time of creation of the actual application are different, the applications are not compatible. Further, since both of them are transmitted in the binary level as a final form when they are finally transmitted, the transmission formats are not also compatible.

The interactive systems described in the two documents have been described, but it is expected that third and fourth interactive systems will be developed. Under this condition, they are used as individual systems and require individual encoders.

As described above, recently, a large number of interactive television systems are proposed, but there occurs a problem that the applications are not compatible in the respective systems and encoders and decoders inherent thereto are required. Further, if the formats thereof are forcedly unified, the free definition of the objects and the development of the systems will be restricted. Further, in recent years, the television receiver is used as a display and various domestic devices (such as VTR, DVD) are connected thereto and used. In this case, the respective devices have remote control devices and the operations thereof are complicated.

Therefore, in order to solve the above problems, this invention is made to provide a device having a function of interactive communication with various devices via a network.

Further, an object of this invention is to provide a device which can attain the compatibility with respect to interactive systems independently developed by use of various devices.

Further, an object of this invention is to provide a device which permits the guides of various external devices to be seen when they are connected thereto and permits the operations and controls to be effected through display of the guides (icons, control panels).

### Disclosure of Invention

A control device of this invention is a device for performing interactive communication with respect to network devices constructing a network via the network. An object of the interactive communication is to control the network devices.

In this invention, when the control device and the network device perform the interactive communication, various methods are disclosed as the communication method.

The control device of this invention basically comprises an input terminal for receiving information from the network device; operation image creating means used as assistant for the user for controlling the network device; control information creating means responding to the operation of the user; and an output terminal for outputting control information for controlling the network device.

As information transmitted from the network device to the control information, various information items such as first control information for controlling the network itself, function information indicating functions which the network device has, function information indicating functions associated with the first control information, image information associated with the first control information, icon image information associated with the first control information are provided and the information items are used selectively or in combination.

As the information used by the operation image creating means, the first control information, image information, icon image information and image information stored an image memory which the operation image creating means itself has are used selectively or used in combination.

Further, the control device may have adjusting means for adjusting at least one of the arrangement and size of the operation image to form a display image.

Further, the network device of this invention basically comprises storing means; outputting means; and means for responding when information is input from another network device. In the storing means, control information, image information, function information are stored selectively or in combination and they are used for respective objects of application. Further, it has a function of transmitting the control information, image information, function information selectively or in combination from the outputting means to the different network device.

### Brief Description of Drawings

FIG. 1 is a diagram showing one embodiment of this invention.
FIG. 2 is a diagram showing another embodiment of this invention.
FIG. 3 is a diagram showing a concrete construction example of the block of FIG. 1.
FIG. 4 is a diagram showing an example of the formation of classes of data in this invention.
FIG. 5 is an illustrating diagram for illustrating the operation function of the device of this invention.
FIG. 6 is a diagram showing still another embodiment of this invention.
FIG. 7 is a diagram showing still another embodiment of this invention.
FIGS. 8A to 8C are illustrating views for illustrating display examples of the device of this invention.
FIG. 9 is a diagram for illustrating an example of the data transmission form in this invention.
FIG. 10 is a diagram for illustrating an example of another data transmission form in this invention.
FIGS. 11A to 11F are diagrams for illustrating still another example of the data transmission form in this invention.
FIG. 12 is a diagram showing an example of an identification signal in the data unit used in this invention.
FIG. 13 is an illustrating diagram for illustrating an example of the conventional button object.
FIG. 14 is a diagram for illustrating another example of the conventional button object.
FIG. 15 is a diagram for illustrating an example of a button object of this invention.
FIG. 16 is an illustrating diagram showing an example of the conventional bitmap.
FIG. 17 is an illustrating diagram showing another example of the conventional bitmap.
FIG. 18 is a diagram showing an example of the bitmap of this invention.
FIGS. 19A to 19G are diagrams for illustrating still another example of the data transmission form in this invention.
FIGS. 20A to 20G are diagrams for illustrating still another example of the data transmission form in this invention.
FIGS. 21A, 21B are diagrams for illustrating still another example of the data transmission form in this invention.
FIG. 22 is a diagram showing still another embodiment of this invention.
FIG. 23 is a view showing an example of the display screen of the device of FIG. 22.
FIG. 24 is a diagram showing a construction example of a network device according to this invention.
FIG. 25 is a diagram showing a construction example of a display screen adjusting device in an engine of FIG. 24.
FIG. 26 is a diagram showing a map of the display form of the screen.
FIG. 27 is a view showing a display example of the display screen.
FIG. 28 is a view showing a display example of the display screen.
FIG. 29 is a view showing a display example of the display screen.
FIG. 30 is a view showing a display example of the display screen.
FIG. 31 is a view showing a display example of the display screen.
FIG. 32 is a view showing a display example of the display screen.
FIG. 33 is a view showing an example of control panel display of the network device.
FIG. 34A is an illustrating diagram showing the type and handling of an event in the system of engine 1.
FIG. 34B is an illustrating diagram showing the type and handling of an event in the system of engine 2.
FIG. 35 is an illustrating diagram showing the conversion process for handling the event of the execution system 1 in the execution system 2.
FIG. 36 is an illustrating diagram showing the conversion process for handling the event of the execution system 2 in the execution system 1.
FIG. 37 is a view showing a display example of the display screen.

### Best Mode for Carrying Out the Invention

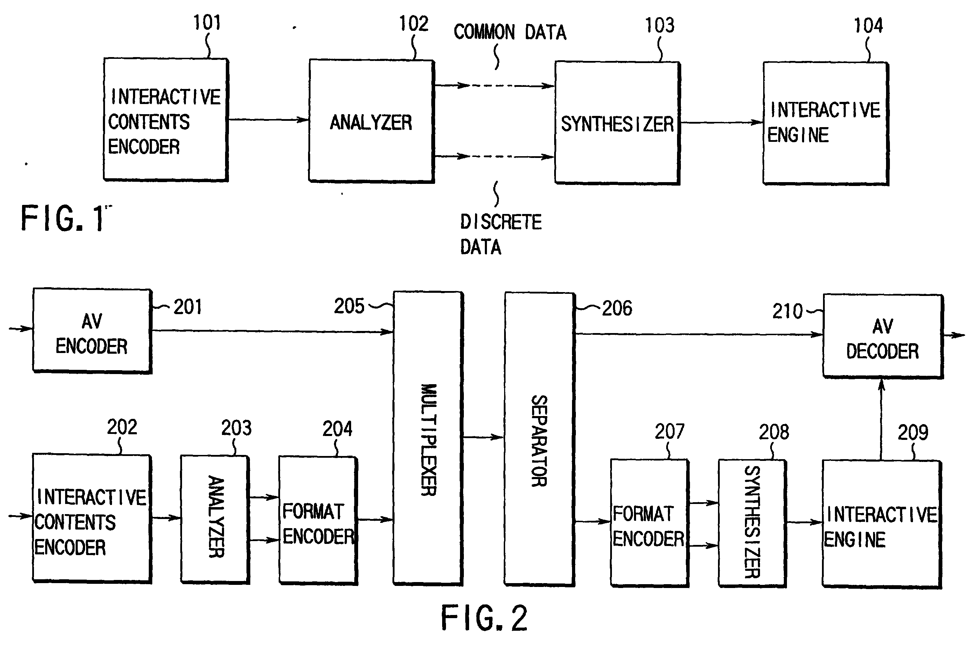

There will now be described embodiments of this invention with reference to the accompanying drawings. FIG. 1 shows a basic form of the first embodiment according to this invention. An interactive contents encoder 101 encodes interactive contents created and outputs the result to an analyzer 102. The analyzer 102 analyzes the input interactive contents and outputs common data and discrete data.

As the discrete data, the given name thereof is not limited to this, and various kinds of given names such as expansion data, additional data, difference data and auxiliary data can be used. Further, as the common data, various kinds of given names such as main data, parent data and trunk data can be used.

The common data and discrete data are input to and synthesized by a synthesizer 103. The synthesized data is input to an interactive engine 104 and an application is executed by the engine.

The common data is constructed by the following elements, for example.
[1] common object
[2] common data contents

The discrete data is constructed by the following elements, for example.
[1] succession difference component
[2] script

The details of the above items are explained later.

In FIG. 2, a construction in which the first embodiment of this invention is applied to an actual transmitting/receiving system is shown. An audio/video (AV) encoder 201 encodes video and audio signals and converts them to a digital signal train. On the other hand, an interactive contents encoder 202 encodes interactive contents and inputs the result to an analyzer 203. The analyzer 203 analyzes and separates the interactive contents into common data and discrete data and outputs the result to a format encoder 204. In the format encoder 204, the common data and discrete data are multiplexed and output to a multiplexer 205. The multiplexer 205 multiplexes the output of the AV encoder and the output of the format encoder 204 and transmits the multiplexed signal.

Various methods are provided as a method for multiplexing the common data and discrete data, and for example, a method for packetting each data, adding an identification code to each packet and multiplexing the packets on time axis is used.

On the receiver side, a multiplexed signal is received and separated into an image/voice and data for interactive contents by a separator 206.

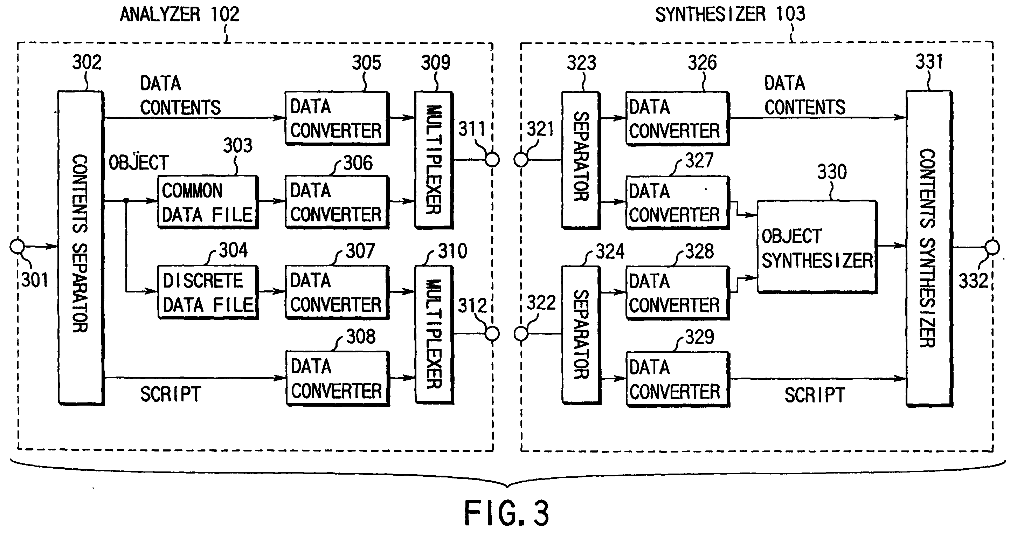

The separator 206 outputs the video/audio data to an AV decoder 210 and outputs the data for interactive contents to a format decoder 207. The format decoder 207 separates the input data into common data and discrete data and inputs the respective data items to a synthesizer 208. In the synthesizer 208, the common data and discrete data are synthesized and data is output to an interactive engine 209. In the interactive engine 209, an application is constructed by use of input data and the result is output to the AV decoder 210. In the AV decoder 210, the reproduced image/voice and application are executed and reproduced to display an image and graphic image. FIG. 3 shows the analyzer 102 and synthesizer 103 shown in FIG. 1 in detail.

The analyzer 102 is constructed by a contents separator 302, common data filter 303, discrete data filter 304, data converters 305, 306, 307, 308 and multiplexers 309, 310.

The contents separator 302 separates the interactive contents input from an input portion 301 into data contents, object and script. The data contents are converted to a preset format by the data converter 305 and input to the multiplexer 309 as common data contents. Likewise, the script is converted to a preset format by the data converter 308 and input to the multiplexer 310.

The object is separated into a common data object and succession difference component. That is, the common data filter 303 extracts a component defined as the common data object and the discrete data filter 304 extracts a component which is not defined as the common object as the succession difference component. An output (common data object) of the common data filter 303 is converted to preset data by the data converter 306, multiplexed together with the common data contents by the multiplexer 309 and output as common data from an output portion 311. On the other hand, an output (succession difference component) of the discrete data file 304 is converted to a preset data format by the data converter 307, multiplexed together with the script by the multiplexer 310 and output as discrete data from an output portion 312.

The synthesizer 103 includes separators 323, 324, data converters 326, 327, 328, 329, object synthesizer 330 and contents synthesizer 331. Common data input via an input portion 321 is separated into common data contents and common data object by the separator 323. The common data contents are converted to data contents by the data converter 326 and the common data object is also converted to a preset format by the data converter 327.

On the other hand, discrete data input via an input portion 322 is separated into a script and succession difference component by the separator 324. The succession difference component is converted to a preset format by the data converter 328 and the script is converted to a preset format by the data converter 329. In this case, outputs of the data converter 327 and data converter 328 are synthesized by the synthesizer 330 and used as a final object. Further, data contents output from the data converter 326, the final object output from the object synthesizer 330 and the script output from the data converter 329 are synthesized by the contents synthesizer 331 to make final interactive contents and output from an output portion 332.

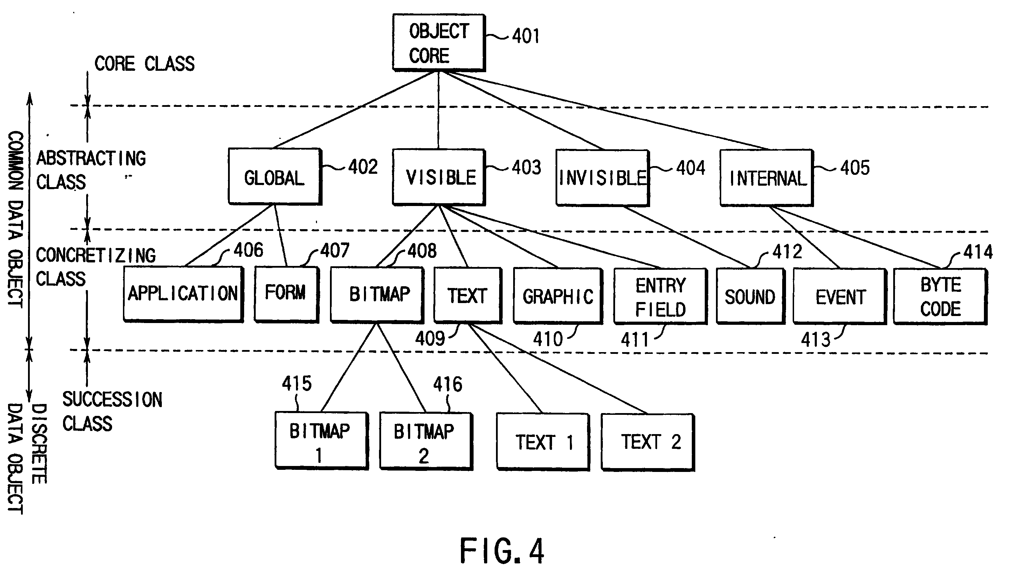

As described above, in the signal transmitting/receiving device of this invention, the object is divided into a common data object and succession difference component and transmitted. The constructions are explained in detail with reference to FIG. 4. Generally, the interactive system using the object as a basis has a basic object for creation of an application. In this invention, the object-oriented technology is introduced and an object inherent to each system is formed based on the basic object. In the way of considering the object orientation, the object succeeds the function of an object which will become a parent and creates an object which will become a child. In either object in the interactive system, division thereof can be made as the function of the basic object and the expansion function thereof. The objects in the document 1 and document 2 are not exceptions.

As shown in FIG. 4, if an object having a function at least required for interactive application is used as an object core class 401, it can be classified into abstract classes such as a global class 402 having the main property expressing the whole application, a visible class 403 displayed as a graphic, an invisible class 404 such as a sound which is invisible but reproduced and an internal class 405 for controlling the internal operation in any application. Examples of concretizing classes which are created by succeeding the abstract classes are shown in 406 to 414. That is, they are an application, form, bitmap, text, graphic, entry field, sound, event and byte code. They are examples of objects at least required for creating any type of interactive application. Objects up to the concretizing class are treated as the common data objects and objects inherent to a different system can be created by succeeding the common data objects. The succession difference component is a component indicating a difference caused when the object of each system is succeeded from the common data object.

In this embodiment, the following nine objects are shown as the above common data object.
[1] Application : information necessary for the whole application is contained.
[2] Form : information for constituting one page is contained.
[3] Bit Map : an image is displayed.
[4] Text : a text is displayed.
[5] Graphic : a rectangle and lines are displayed.
[6] Entry Field : characters are input.
[7] Sound : a sound is reproduced.
[8] Event : movement of the object is controlled.
[9] Byte Code : information relating to the script and byte code is contained.

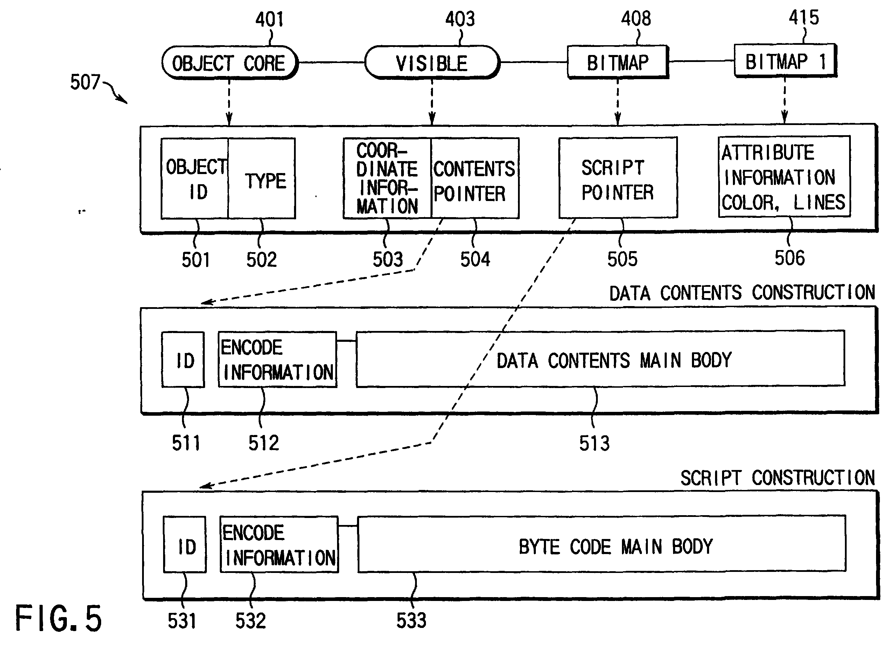

FIG. 5 shows an example of the concrete construction of an object.

An object ID 501 and type 502 are formed as the object core 401. Coordinate information 503 and a contents pointer (or ID) 504 to data contents are formed as the visible class and a script pointer 505 to the script is created by a bitmap class 408. The common object has the construction described above.

Then, the succession difference component used as the peculiar function of the system is arranged. For example, in the bitmap 1, information 506 relating to color and lines is set. The succession difference component is the information 506 relating to the color and lines. All of them are defined as the object.

In a position indicated by the contents pointer 504, an ID 511 indicating that the data string is data contents and set in the head portion, encode information 512 and data contents main body 513 are arranged. Further, in a position indicated by the script pointer 505, for example, an ID 531 indicating a byte code and set in the head portion, encode information 532 and byte code main body 533 are arranged.

As the representative of the data contents, images are provided, but they are generally compressed and transmitted. Therefore, the compression process is effected on the transmission side and the expansion process is effected on the engine side. Unlike the case of the object, standardization for image compression is effected and they are transmitted in a format such as JPEG, GIF. Therefore, since it is relatively easy to make the data contents common, they can be transmitted as common data contents. When a peculiar compression system or the like is used, they can be transmitted as discrete data different from the common data contents. In this case, they are multiplexed on the script as discrete data contents and transmitted.

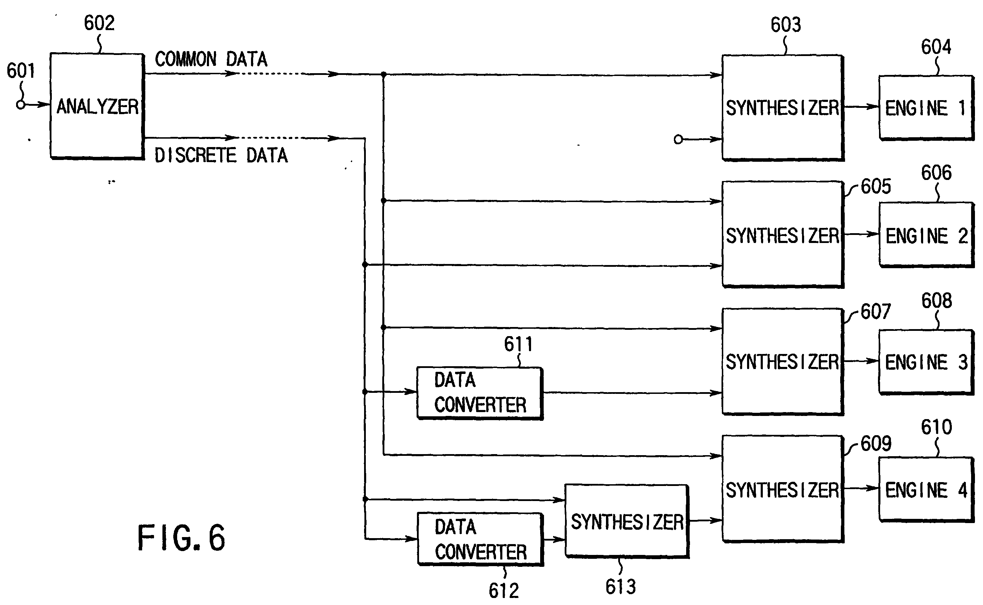

FIG. 6 shows a still another embodiment of this invention.

Interactive contents input via an input portion 601 are divided into common data and discrete data in an analyzer 602. In the actual transmission, as shown in FIG. 2, they are multiplexed on another digital signal and transmitted.

Common data is supplied to a first engine 604 via a synthesizer 603. Further, the common data is also supplied to a second engine 606 via a synthesizer 605, supplied to a third engine 608 via a synthesizer 607, and supplied to a fourth engine 610 via a synthesizer 609.

Discrete data is input to a synthesizer 605 as first discrete data and converted by a data converter 611 to make second discrete data which is input to the synthesizer 607. Further, the first discrete data is input to a synthesizer 613, and at the same time, it is converted by a data converter 612 to make second discrete data which is input to the synthesizer 613. As a result, third discrete data obtained by synthesizing the first discrete data and second discrete data is derived from the synthesizer 613 and the third discrete data is input to the synthesizer 609.

In this embodiment, the first engine 604 receives and decodes only the common data. The second engine 606 receives and decodes the common data and first discrete data. Further, the third engine 608 receives and decodes the common data and the second discrete data converted from the first discrete data. Further, the fourth engine 610 receives and decodes the common data and the third discrete data obtained by converting the first discrete data to the second discrete data and synthesizing the second discrete data and first discrete data.

Since the first engine 604 receives only the common data, the function thereof is limited, but it can receive interactive contents encoded in a different system and execute an application. The second engine 606 can reproduce the original application. The third engine 608 is an engine of an originally different system, but it can execute an application of the different system by converting the first discrete data to the second discrete data and using the same. Since the data converter 611 can be realized by changing only the succession difference component of the object, it can be realized in a smaller scale in comparison with a converter for converting an object itself (whole portion of the object). This can be applied to the system of the fourth engine 610.

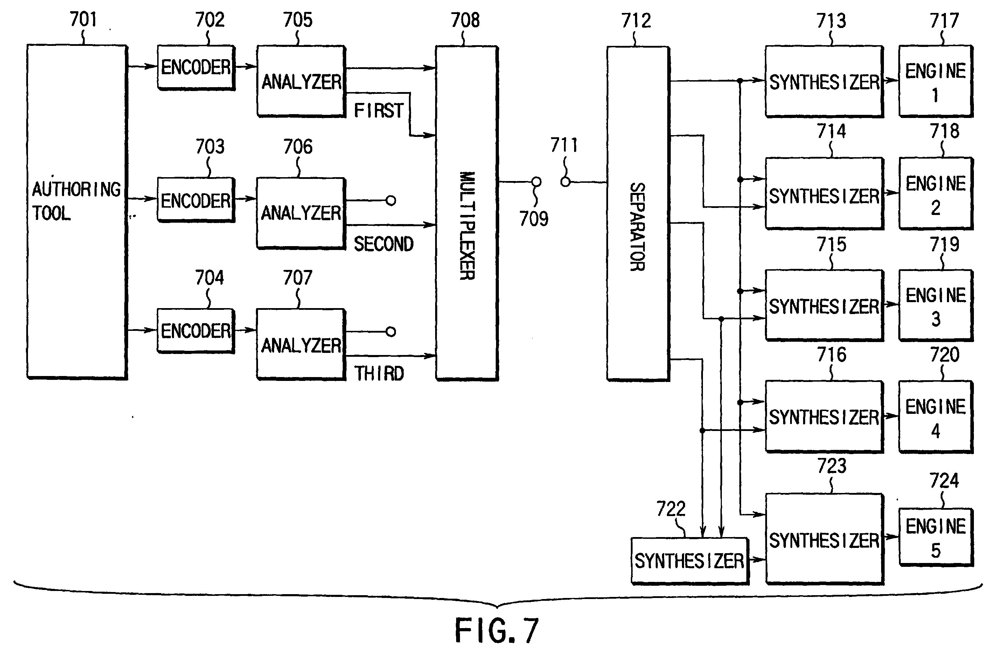

FIG. 7 shows still another embodiment.

In a case where the devices of the systems are independently constructed, an encoder 702 is set in a corresponding relation with respect to a second engine 718 in a system 1, an encoder 703 is set in a corresponding relation with respect to a third engine 719 in a system 2, and an encoder 704 is set in a corresponding relation with respect to a second engine 720 in a system 2. In this embodiment, a construction which allows compatibility between different systems is obtained.

Interactive contents output from an authoring tool 701 are encoded by the encoders 702, 703, 704. The respective encoded data items are input to analyzers 705, 706, 707 and converted to common data items and first, second, third discrete data items. Since all of the common data items are the same, only the second and third discrete data items are derived from the analyzers 706, 707. A multiplexer 708 multiplexes the common data and first to third discrete data items and outputs the result from an output portion 709.

On the receiver side, data input via an input portion 711 is divided into common data, first discrete data, second discrete data and third discrete data by a separator 712.

The common data is commonly input to synthesizers 713, 714, 715, 716, 723. In this case, the synthesizer 713 creates interactive contents only based on the common data and supplies the same to a first engine 717 which executes an application. The synthesizer 714 creates interactive contents based on the common data and first discrete data and supplies the same to a second engine 718 which executes an application. The synthesizer 715 creates interactive contents based on the common data and second discrete data and supplies the same to a third engine 719 which executes an application. The synthesizer 716 creates interactive contents based on the common data and third discrete data and supplies the same to a fourth engine 720 which executes an application.

Thus, it becomes possible to execute the application in the engines corresponding to the different systems.

In this case, it is possible to construct an engine having both of the functions of applications of the engines 719 and 720 in a new fifth engine 724 by creating fourth discrete data by use of the second and third discrete data items by the synthesizer 722 and synthesizing the fourth discrete data and the common data by the synthesizer 723.

In this embodiment, since the number of discrete data items increases to "3", it seems that a larger transmission capacity is required, but since the common data contents such as image data occupy most part of the interactive contents in normal applications, an increase in the discrete data is as small as negligible.

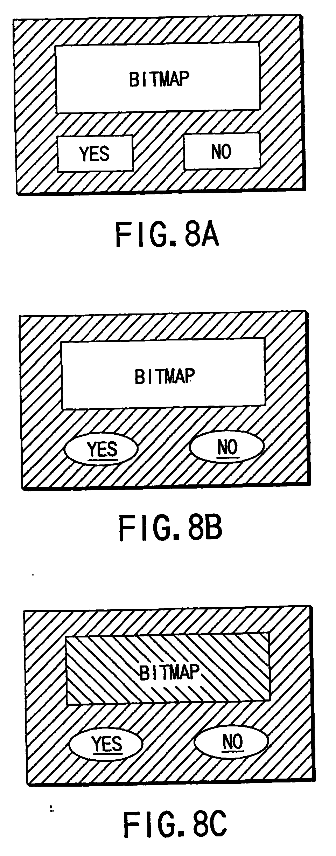

FIGS. 8A to 8C show examples of the applications of the systems shown in the above embodiment. An image state when the application of the first engine 717 is executed is shown in FIG. 8A, an image state when the application of the third engine 719 is executed is shown in FIG. 8B and an image state when the application of the fifth engine 724 is executed is shown in FIG. 8C.

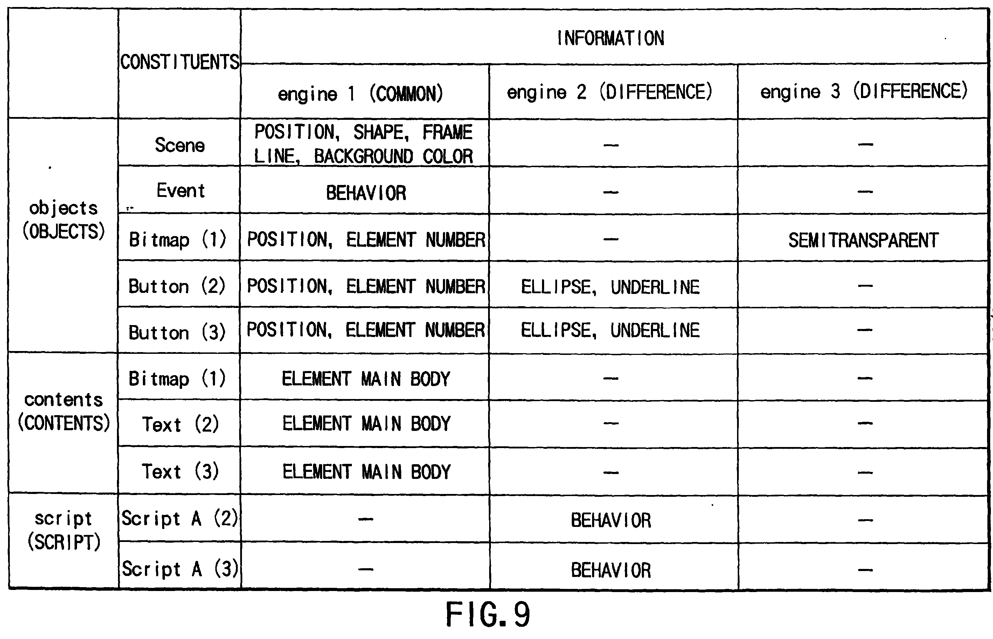

FIG. 9 shows examples of the common data, second discrete data for the second engine and third discrete data for the third engine. The first engine 717 executes the application based on only the common data. In the common data, only basic parameters are defined. Since an attribute specifying an ellipse is contained as the shape of the bitmap and the button in the succession difference component of the second discrete data, the shape of the ellipse is obtained in the application executed by the second engine 719 as shown in FIG. 8B. Further, since an attribute of "semitransparent" is contained in the bitmap object in the third discrete data, both of the succession difference components of the second and third discrete data items can be utilized in the fifth engine 724, and therefore, it becomes possible to create an elliptical and semitransparent bitmap.

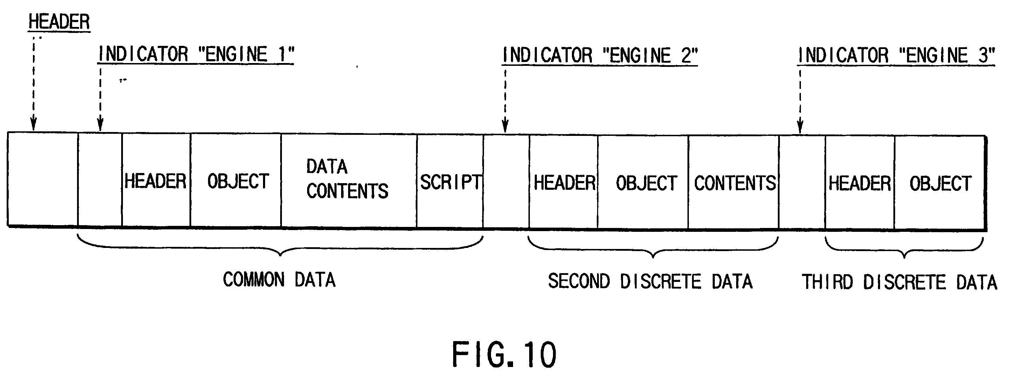

FIG. 10 shows the data structure obtained by multiplexing the common data and the second and third discrete data items. Following header information, an "engine 1" is shown as an indicator in the head portion of the common data section. Further, an object, data contents are inserted. Following this, in the discrete data section, an "engine 2" is shown as an indicator indicating the second discrete data and the succession difference component is inserted as the discrete data. In addition, an indicator "engine 3" indicating the third discrete data follows and the succession difference component is inserted.

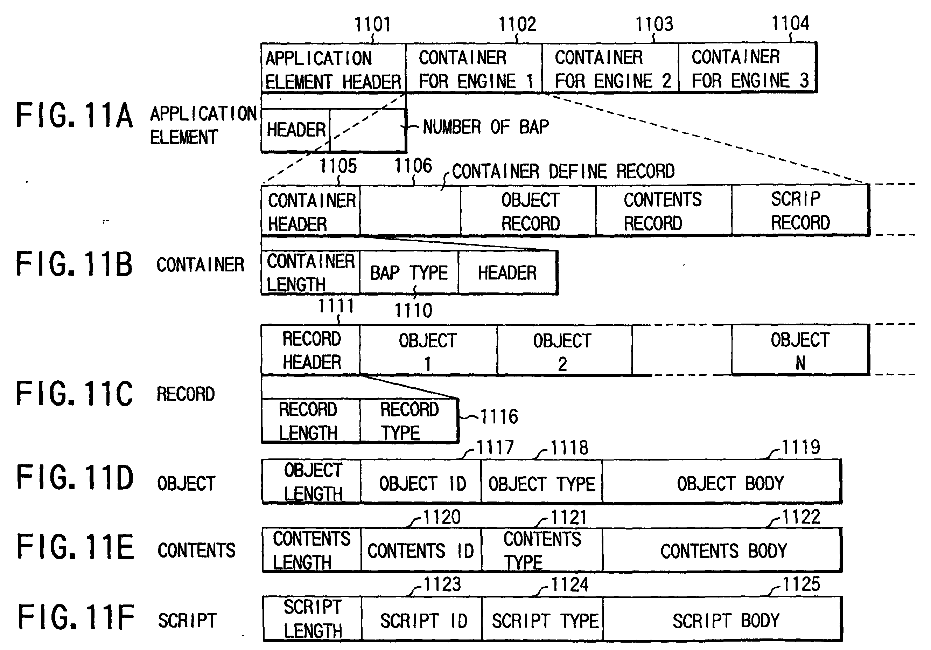

The transmission method for the above application constituents is explained with reference to FIGS. 11A to 11F.

FIGS. 11A to 11F are auxiliary diagrams for explaining the data transmission unit layer structure in the embodiment of this invention. An application element in FIG. 11A is a transmission unit containing all of the constituents of one application. The structure thereof is constructed by an application element header 1101 having information associated with the whole application and containers 1102, 1103, 1104 including data items for the respective engines.

The container 1102 for the first engine transmits data commonly used by the respective engines, the container 1103 for the second engine transmits data which is exclusive for the second engine and is not contained in the container 1102 and the container 1104 for the third engine transmits data which is exclusive for the third engine and is not contained in the container 1102. Each container which corresponds to data for what one of the engines is identified by a broadcast application type (BAP type) 1110 in the container header 1105. One application element may contain a given number of containers. Each container has a common structure as shown in FIG. 11B. The structure is constructed by a container header 1105 having information associated with the whole portion of the container, container define record 1106, and three types of records of objects, contents and script for transmitting data of the application main portion.

The record is divided into the above three types of data items and the constituents thereof are described therein. For example, as shown in FIG. 11C, the object record is constructed by a record header 1111 and whole objects including objects 1, 2, ..., N and constituting the application. The contents record and script record are set in the same manner, but in FIGS. 11A to 11F, the object record is shown as a representative. If data for the first engine shown in FIG. 9 is transmitted, the object includes the constituents including the scene, event, bitmap (1), button (2) and button (3). Likewise, in the content record, a bitmap (1), text (2) and text (3) are the constituents, and in the script record, a script A (2) and script A (3) are the constituents.

The type of data of the record is identified by a record type 1116 in the record header 1111. Of course, if any type of data for the engine is not provided, the record is not transmitted. For example, in data for the third engine explained with reference to FIG. 9, since only the bitmap object is present, only the object record is present in the container for the third engine. Each of the object, contents and script includes identification information items (ID) 1117, 1120, 1123, type information items (type) 1118, 1121, 1124 indicating the types thereof and bodies (body) 1119, 1122, 1125 as actual data. In this case, if a case of FIG. 9 is taken as an example, the types are a scene, event, bitmap and button in the object record, a bitmap and text in the contents record and a script A in the script record.

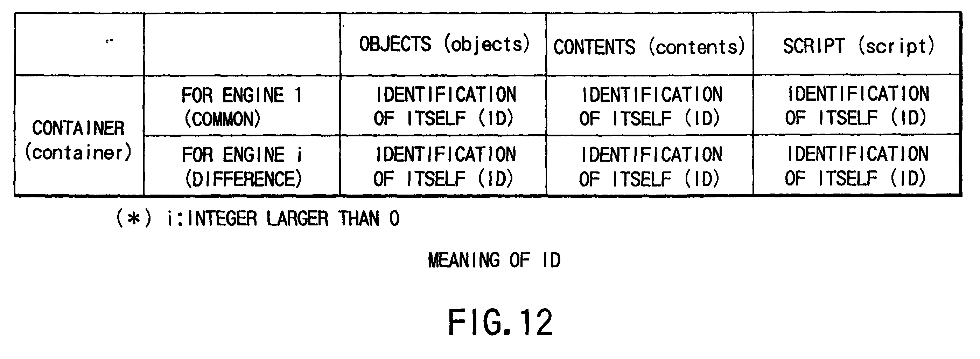

Since the ID has different meanings depending on the type of the record and container, the contents thereof are explained below with reference to FIGS. 4, 12.

The ID can be divided into cases wherein it indicates its own identification number and it is the number indicating the succession source of itself. In FIG. 12, meanings of the ID for each type of the record and container are shown. As has been described above, in this invention, a given engine uses a combination of common data common for the respective engines and its own independent discrete data which is not contained in the common data. Since each data is transmitted by use of a different container and they are added together after being received, it becomes necessary to clearly indicate the relation thereof and the ID is used for this purpose.

As shown in FIG. 4, bitmap objects 415, 416 which are discrete data items for individual engines are added to a bitmap object 408 which is common data. At this time, the ID of each of the bitmap objects 415, 416 has the same value as the ID of the bitmap object 408 of common data which is its own succession source and indicates the succession relation.

Therefore, as shown in FIG. 12, the object in the object record in the container for the first engine has an ID as the number for identifying itself and the object in the object record in the container for transmitting difference data for a different engine has an ID value which is the same value as the ID of the object for the first engine which is its own succession source (assignment). Further, an ID value for indicating the succession relation has the same value and, for example, part of the ID value (for example, several upper bits) may indicate the succession relation.

On the other hand, since the contents and script are not added together and used, they have different ID values as numbers for identifying themselves in every case and they are referred to by use of the ID values from the objects.

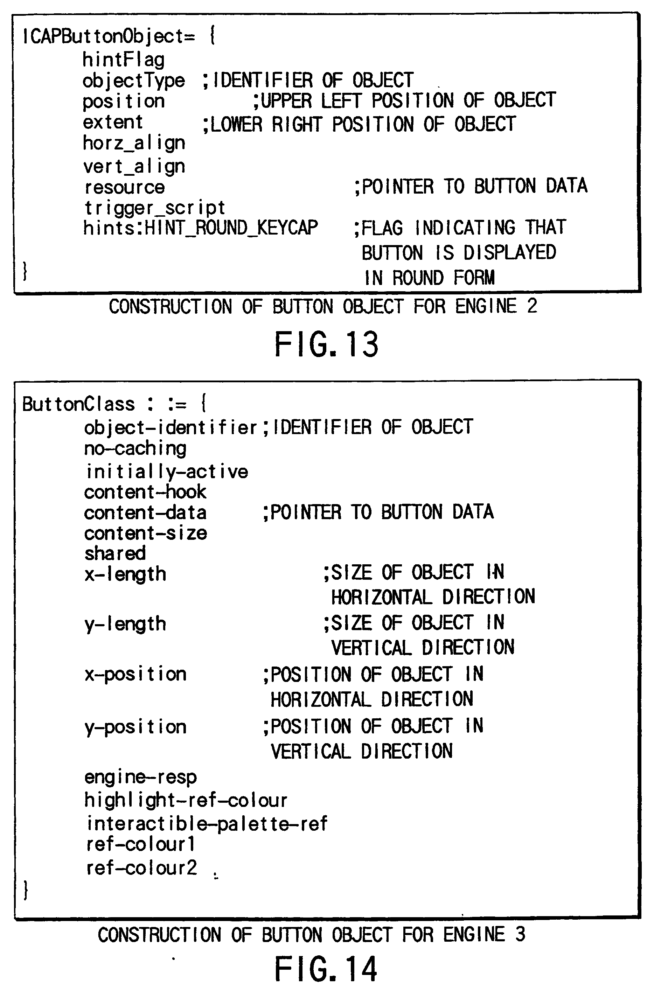

Next, one embodiment of data transmission in this invention is explained with reference to FIGS. 13 to 18.

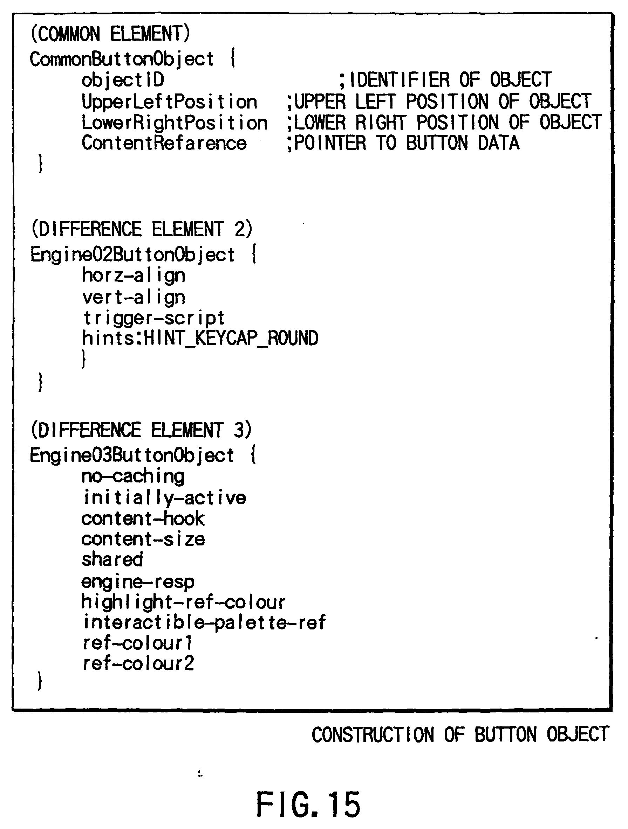

FIG. 13 shows the construction of a button object for the second engine which is constructed according to "ICAP Specification, Version 1.0, Document Revision 1.2", Apr. 1997 (document 3) and FIG. 14 shows the construction of a button object for the third engine constructed according to the document 2. Further, FIG. 15 shows a case wherein the above bitmap objects are constructed by the data transmission system according to this invention.

Since "object Type" in FIG. 13 and "object-identifier" in FIG. 14 both express identifiers of objects, they are expressed as a common element "Object ID" of FIG. 15. Likewise, "position", "extent" of FIG. 13 indicating the display position of the object and "x-length", "y-length", "x-position", "y-position" of FIG. 14 are expressed as common elements "Upper Left Position" and "Lower Right Position" in FIG. 15. Further, "resource" in FIG. 13 and "content-data" in FIG. 14 which both indicate pointers to button data are expressed as "Content Reference" of FIG. 15. Portions other than the above portions are constructed as a difference element 2 and difference element 3 which are discrete data of FIG. 15. "hints: HINT_ROUND_KEYCAP" which is a flag indicating that the button is displayed in a round form is inserted into the difference element 2 and constructed.

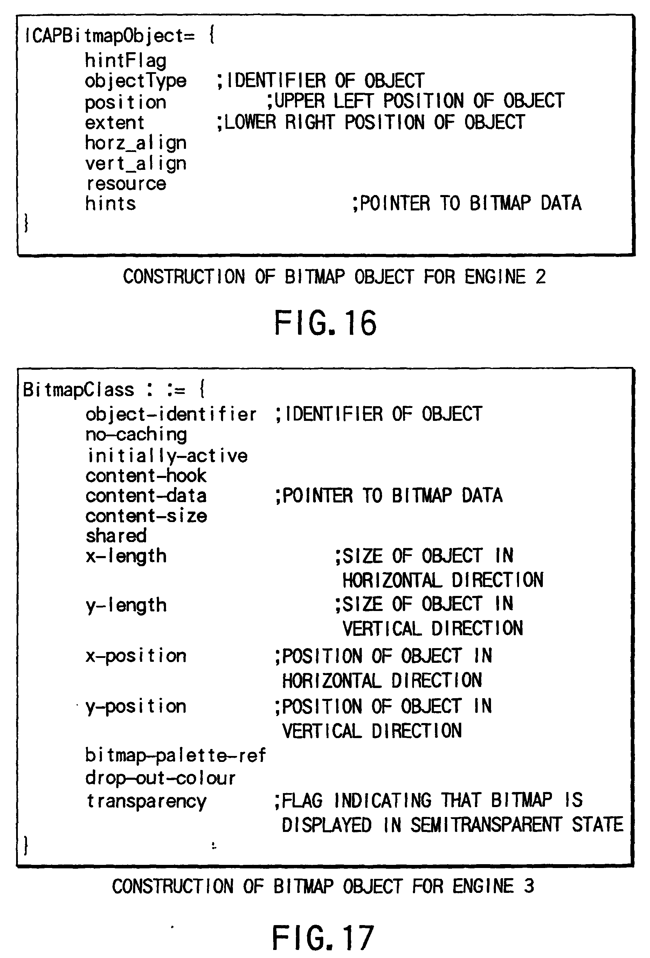

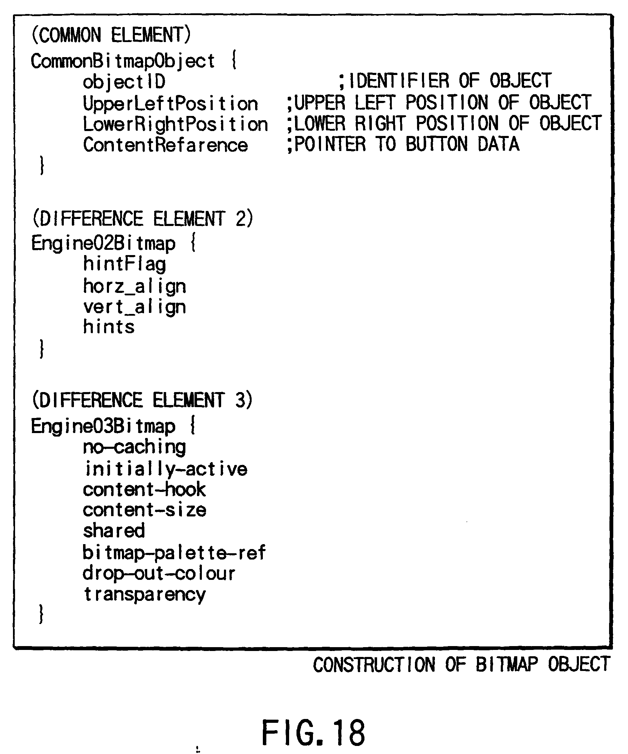

FIG. 16 shows the construction of the bitmap object for the second engine and FIG. 17 shows the construction of the bitmap object for the third engine. Further, FIG. 18 shows the construction of the above bitmap objects by use of the data transmission system according to this invention.

Since "object Type" of FIG. 16 and "object identifier" of FIG. 17 both express the identifier of the object, they are expressed as a common element "Object ID" in FIG. 18. Likewise, "position", "extent" of FIG. 16 indicating the display position of the object and "x-length", "y-length", "x-position", "y-position" of FIG. 17 are expressed as common elements "Upper Left Position" and "Lower Right Position" in FIG. 18. Further, "resource" in FIG. 16 and "content-data" in FIG. 17 which both indicate pointers to button data are expressed as "Content Reference" of FIG. 18.

Portions other than the above portions are constructed as a difference element 2 and difference element 3 of FIG. 18. "transparency" which is a flag for specifying that the bitmap is displayed in a semitransparent state is constructed as the difference element 3.

The construction of common data in the above embodiment is made on condition that the data concept (for example, "text" or "bitmap") which is common for all of the different systems is present, but this case is not limitative and it is considered in some cases that the data concept which is present in a certain system is not present in one or more other systems among the different systems. In such a case, since data which can be constructed as common data is not present, the above method cannot be used as it is, but it is possible to maintain and use the data constructing method of this invention described before by defining blank common data in which no body is present.

The blank common data is common data in which no body is present and only an ID is contained and the whole portion of data inherent to the system is constructed as discrete data by using the above data. An object ID (object ID) of blank common data is assigned to the discrete data to indicate that the blank common data is a succession source.

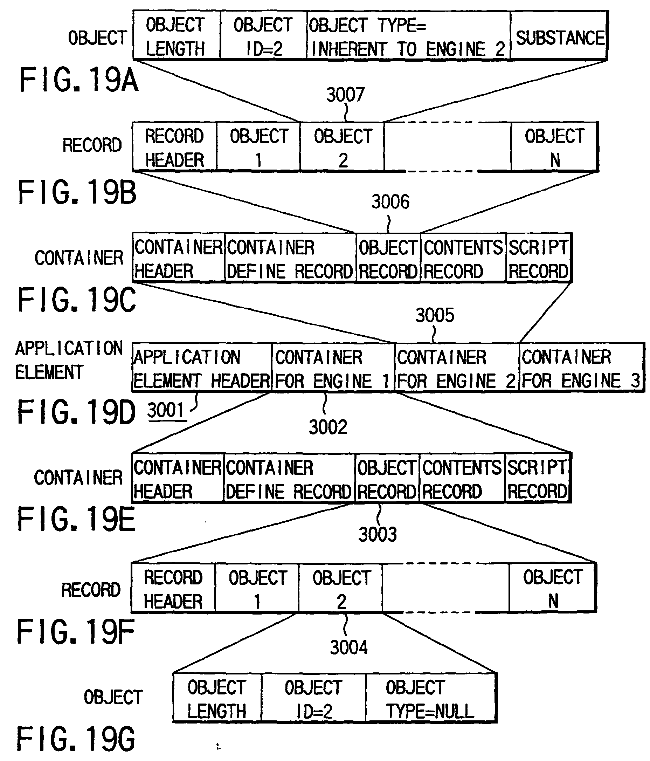

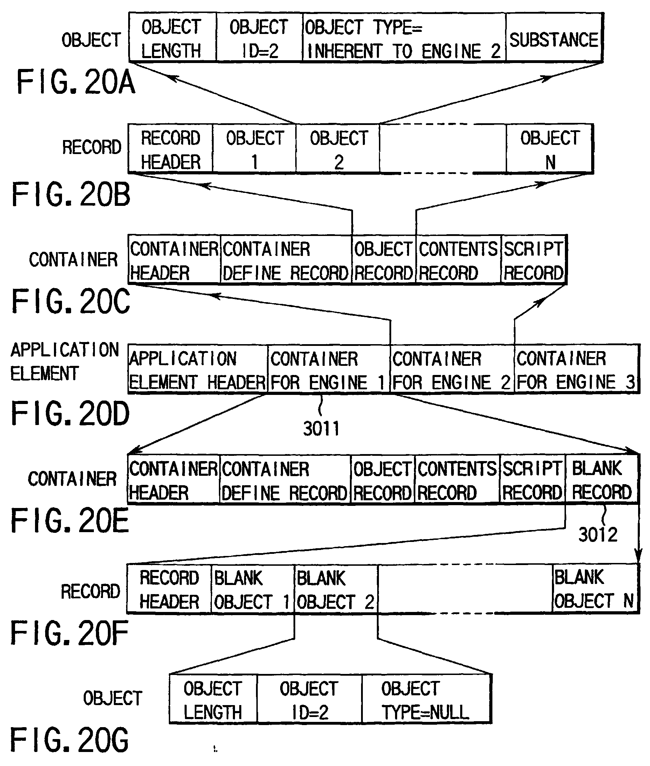

As an example, a case wherein an object which is inherent to the second engine, present only in the second engine and is not present in other engines is constructed by the above method is explained with reference to FIGS. 19A to 19G and FIGS. 20A to 20G.

In this example, a case of the object is shown, but the same construction can be made in cases of the contents and script. In FIGS. 19A to 19G, objects are arranged in an object record 3003 in a container 3002 (FIG. 19E) for the first engine (common data) contained in an application element 3001 (FIG. 19D), the object type of an object 3004 which is one of the above objects is "NULL (blank)" and a blank object in which the ID value of the object ID is 2 is placed (FIGS. 19F, 19G). The object 3004 has no object body (the contents of data are blank).

On the other hand, in the whole portion of the substance of the object inherent to the second engine, objects are arranged in an object record 3006 in a container 3005 (FIG. 19C) for the second engine. The object type of an object 3007 which is one of the arranged objects is "inherent to the second engine" and the ID value of the object ID is 2 (FIGS. 19A, 19B). Thus, the ID value of the object ID for the second engine is set to 2 which is the same value as in the case of the first engine to indicate that a blank object 3004 is succeeded.

In the example of FIGS. 19A to 19G, the NULL objects are placed in various types of records (object record, contents record, script record), but as shown in FIGS. 20A to 20G, a blank record 3012 which is the fourth type and constructed by collecting only blank common objects is defined other than the object record, contents record, script record in a container 3011 (FIG. 20D) for the first engine and the construction may be made to place blank common data therein (FIG. 20E). In the example of FIG. 20, the ID value of the object (FIGS. 20A, 20B, 20C) which is the destination of succession is set to 2 so that the object of the succession source can be succeeded (FIG. 20G).

As described above, if data constructed by the blank object and discrete object is received by the second engine, the second engine derives the ID value of an object ID from the blank object in the common data (container for the first engine), derives a discrete object having the ID value of the derived object ID from its own discrete data (container for the first engine) and synthesizes them. As the result of synthesis, an object for the second engine having an ID of the blank object and actually having a body of only the discrete object is constructed. Even if an engine other than the second engine, for example, the third engine receives the above data, it derives the blank object from the common data, but since a discrete object corresponding to the ID value of the ID of the blank object is not present in its own discrete data (container for the third engine), the blank object is not subjected to any process.

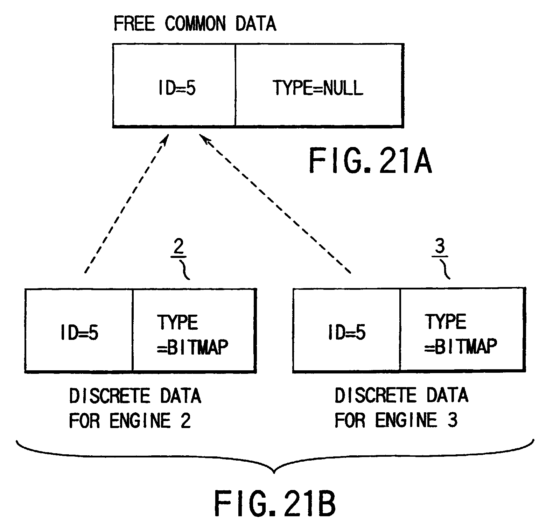

Next, a method for reducing the number of free common data items used when the free common data is used is explained with reference to FIGS. 21A, 21B. The blank common data does not have the type of data such as the object, contents, script (FIG. 21A) and the type of data obtained as the result of synthesis is determined by discrete data to be synthesized (FIG. 21B).

If discrete data associated with the blank common data is inherent to only one of the systems and another blank common object is associated with discrete data inherent to only one different system, it is necessary to use two blank common objects. However, in this invention, the blank common data items can be commonly possessed. That is, as shown in FIGS. 21A, 21B, both of discrete data 2 which is present in the second engine and discrete data 3 which is present in the third engine have the same ID value (for example, 5). The second engine creates data having an ID value of 5 based on the blank common data and discrete data 2 and the third engine creates data having an ID value of 5 based on the blank common data and discrete data 3. Since the discrete data 2 is inherent only to the second engine and the discrete data 3 is inherent only to the third engine, no collision occurs. By the above method, the number of blank common objects filled into the common data record can be reduced, that is, the number of generations of data ID of the common data can be reduced.

A method for constructing the data concept peculiar to the system by use of the blank common data is explained above, but since the ID value of the ID of the blank common data is always described as the ID value of the ID of the discrete data, a construction in which the blank common data is omitted may be made.

If the blank common data is omitted, the ID of the discrete data having the meaning of reference to the blank common data when it is not omitted is changed to have the meaning as an ID for identifying the discrete data itself. Therefore, the other normal data unit in the discrete data, that is, semantics and auxiliary data for referring to the common data used as the succession source are changed, but the syntax itself is exactly the same.

In the embodiment described above, a transmission/reception system for transmitting common data and discrete data by use of the transmitting device and constructing its own application by use of the common data and discrete data necessary for itself on the receiver side is explained. However, this invention is not limited to the above transmission/reception system. For example, it is possible to construct a recording medium such as an optical disk or magnetic disk on which common data and discrete data are recorded. The user reproduces the recording medium by use of a reproducing device and an application necessary for itself can be constructed on the reproducing device side by use of the common data and discrete data. Further, as another embodiment, if common data and discrete data are received, all of the data can be temporarily stored in the recording medium. Then, an application necessary for itself can be constructed by use of the common data and discrete data stored in the recording medium. By doing so, the time zone in which the application is actually utilized and the time zone in which the common data and discrete data are received may be different from each other.

The above embodiment is explained by mainly taking it into consideration that the common data and discrete data are transmitted from the broadcast center side, but this is not limitative. For example, this invention can be applied even when data is transmitted from a different device set in a house to the receiver side. For example, as a different device in the house, a video tape recorder, digital video disk reproducing device, disk reproducing device, personal computer, air conditioner, refrigerator, another television receiver and the like are provided and data from the above devices is also transmitted via the network.

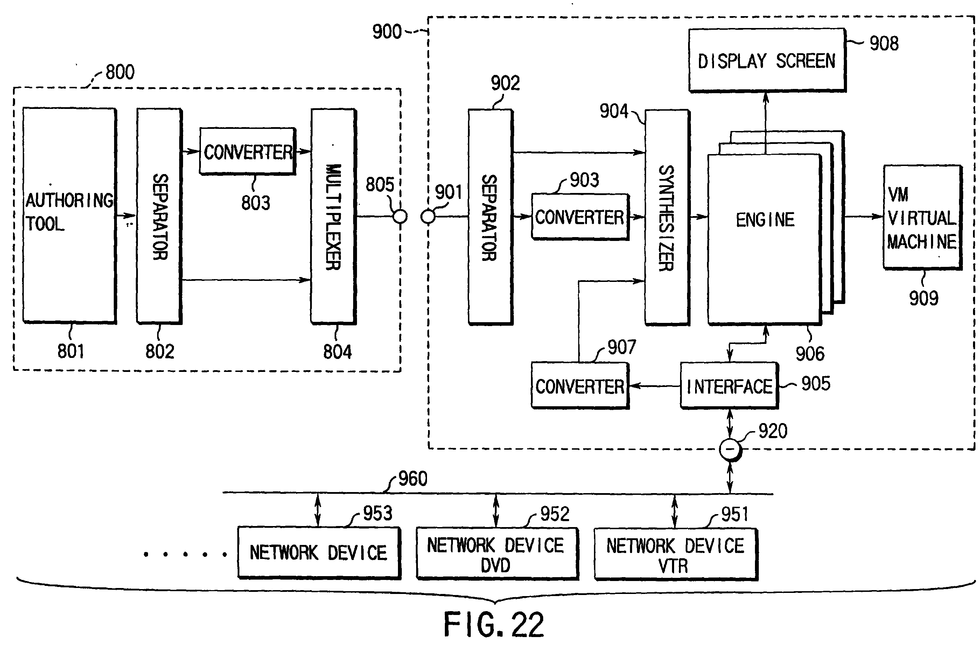

The embodiment is explained with reference to FIG. 22. However, this does not apply to the topology of the network.

In a transmitting device of FIG. 22, an application created in an authoring tool 801 is divided into common data commonly used irrespective of the execution system of the application and discrete data which is determined to be used or not according to the execution system in a separator 802. After this, the common data is converted to a preset format irrespective of the execution system in a converter 803 and input to a multiplexer 804 together with the discrete data to create one data. The data is further multiplexed on data of an image and voice which are not shown in the drawing, subjected to a preset process for transmission which is not shown in the drawing, and then transmitted from a transmission terminal 805. The transmitted data is received by a receiving device 900 via transmitting means such as broadcast using radio waves. The receiving device 900 must always have a display screen 908 necessary for constructing a graphical user interface.

Data received from an input terminal 901 of the receiving device 900 is subjected to a preset process which is not shown in the drawing after reception, then input to a separator 902 after being divided into video and audio data items which are also not shown in the drawing and then divided into common data and discrete data. The divided common data is input to a synthesizer 904 together with discrete data after being converted to a format corresponding to the execution system in a converter 903.

On the other hand, network devices 951 (for example, VTR), 952 (for example, DVD) and 953 (for example, second VTR) supply objects such as scripts for realizing the operations and graphics simulating their own control panels to an input/output terminal 920 of the receiving device 900 via a network 960 as is described in IEEE1394, for example.

In the receiving device 900, an input from the input/output terminal 920 is supplied to an interface (I/F) 905, data (corresponding to common data) which is determined to be directly supplied to the engine 906 is directly supplied to the engine 906, and other data (corresponding to discrete data) is synthesized with the other two inputs in the synthesizer 904 after being converted to a format corresponding to the execution system in a converter 907 and the synthesized data is supplied to the engine 906. The system called the execution system is a system which determines the construction of the engine (a system which the engine can correctly process).

In the engine 906, application data which is outputs of the synthesizer 904 and interface 905 is executed to display an application from the transmitting device 800 together with the objects from the network devices 951, 952, ... on the display screen 908 of the display.

If the object is selected at this time by use of an external inputting device such as a remote controller which is not shown, the script is executed in a virtual machine (VM) 909 and the result thereof is transmitted to the network device arranged on the network to receive the script via the engine 906, I/F 905, input/output terminal 920 and the device performs the preset operation.

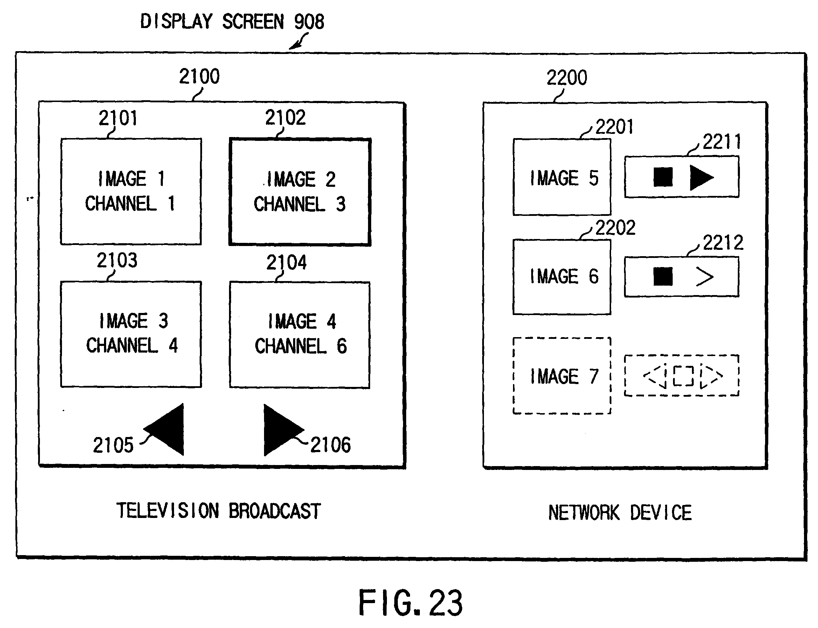

A more concrete example of the operation of the application is further explained with reference to FIG. 23.

FIG. 23 shows an example in which the application is displayed on the display screen 908 when the power supply of the receiving device is turned ON, for example. In this embodiment, an application for selecting a material desired by the user from a broadcasting program material and a material which the network device can reproduce is explained as an example. The basic screen layout when the application is displayed on the display screen 908 is determined by data received from the transmitting device 800. However, this is not limitative and it is possible for the user to freely set the data. A television broadcast selecting window 2100 is provided on the left side of the display screen 908 and a network device selecting window 2200 is provided on the right side.

In the television broadcast selecting window 2100, image contents of the respective channels (programs) which receive the broadcasts are displayed as shown by screens 2101, 2102, 2103, 2104. Further, buttons 2105, 2106 are also displayed. The buttons 2105, 2106 are scroll buttons and selected when the screens of other channels are displayed in the window. Each of the screens 2101 to 2104 also has a button function together with an image display function and if the user selects the screen 2102, for example, the frame of the screen is emphasized as shown in the drawing. Further, although not shown in the drawing, a function of displaying an image of the screen 2102 (channel 3) on the entire portion of the display screen 908 is provided. The above operation is performed by sequentially shifting the emphasized portion of the frame of screen to a next frame of screen when, for example, the shift key of the remote control device is operated and operating a determination key when the frame of a screen of a desired channel becomes the emphasized portion. Then, the channel of the selected screen is fully displayed on the display screen 908.

On the other hand, the screens 2201, 2202 are also displayed in the network device selecting window 2200. Each of the screens displays a reproduced image when the network device 951, 952 is connected, the power supply thereof is set in the ON state, the device is set in the reproducing state and a reproduced video signal is received via the network.

When the network device 951, 952 is connected and set in the standby state while the power supply thereof is set in the ON state, the engine 906 recognizes the network device and displays an image for operation by the button or the like and the screen frame by use of dotted lines, for example, on the display screen.

Further, if the screen 2201 is not set in the image display state, that is, when the corresponding network device 951 is not set in the reproducing state, a reproducing process can be instructed and an image can be displayed on the screen 2201 by selecting a corresponding button 2211 and then selecting and determining a reproducing mark therein. The display positions of the screens 2201, 2202 and buttons 2211, 2212 on the network device selecting window 2200 are determined by data received from the transmitting device 800 as described before or by a display position adjusting method as will be described later or the like, but it is possible to use objects obtained from a corresponding network device via the network for image data, functions and shape data of the buttons 2211, 2212, and the like displayed on the screen. Of course, in this case, it is designed to previously store its own operation objects (a bitmap for creating an image for operation or a control command for operation) as data in the network device so that the data can be supplied when the power supply thereof is turned ON and it is connected to the network. At this time, it is designed to operate irrespective of whether a call from the receiving device 900 is made or not.

Further, it is possible for the receiving device 900 to fetch the object from the network device 951 via the network and use the same when the network device 951 is connected to the network even if the power supply is not turned ON.

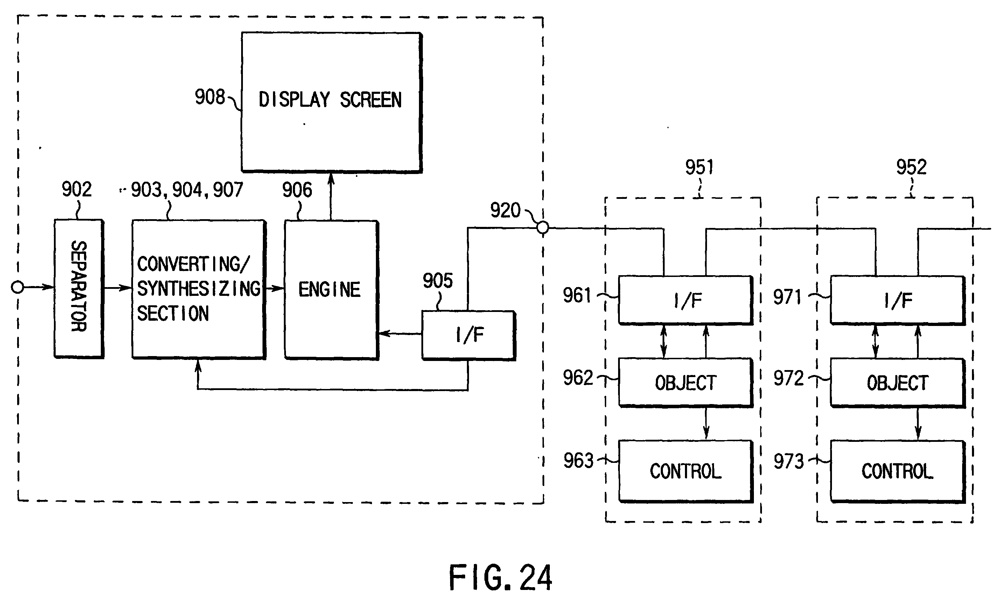

FIG. 24 shows the relation between each of the network devices and the receiving device 900.

The object is constructed by general and inherent control information (information for controlling the device) of the device having the object and GUI information for dealing with the above information. If the network device 951 becomes active in a state where the receiving device 900 is operated, the network device 951 transmits an object which is held in an object storing section 962 contained therein to the engine 906 of the receiving device 900 via an external interface 961 and the network such as IEEE1394, for example. Likewise, the network device 952 holds an object in an object storing section 972 contained therein and transmits the object to the engine 906 via an external interface 971 and the network.

In either case, the engine 906 decodes the recognized object of each device, executes the application and displays icons created based on the GUI information and an image for operation on the display screen 908 if necessary. Further, if the network device 951 is already made active and the device 952 is made active later, objects are received from the devices 951, 952, the objects are decoded and applications are executed in the same manner as in the former case. For example, the network device 952 is connected or the power supply is turned ON, it is possible for the engine 906 to recognize to this effect and display to this effect on the display section by use of a corresponding GUI object. It is also possible for the engine to previously store GUI objects of various types of network devices. Further, it is possible to store the GUI object which is once used.

Further, as described before, the engine 906 records all of common data and discrete data received on a recording medium which is not shown in the drawing. Then, it may construct an application necessary for itself by use of the data recorded on the recording medium. By doing so, the time zone in which the application is actually used and the time zone in which the common data and discrete data are received may be different from each other and it is not necessary to transmit the same object to the device each time the device is made active.

Further, data transmitted via radio wave broadcasting is divided into common data and discrete data in the separator 902, supplied to a converting/synthesizing section constructed by the converters 903, 907 and synthesizer 904 as described in the former embodiment, and after the object conversion and synthesis are effected, the data object is supplied to the engine 906. The data object is converted to a form which is compatible with the above-described object in the engine 906 and dealt with in the same manner as the above-described object.

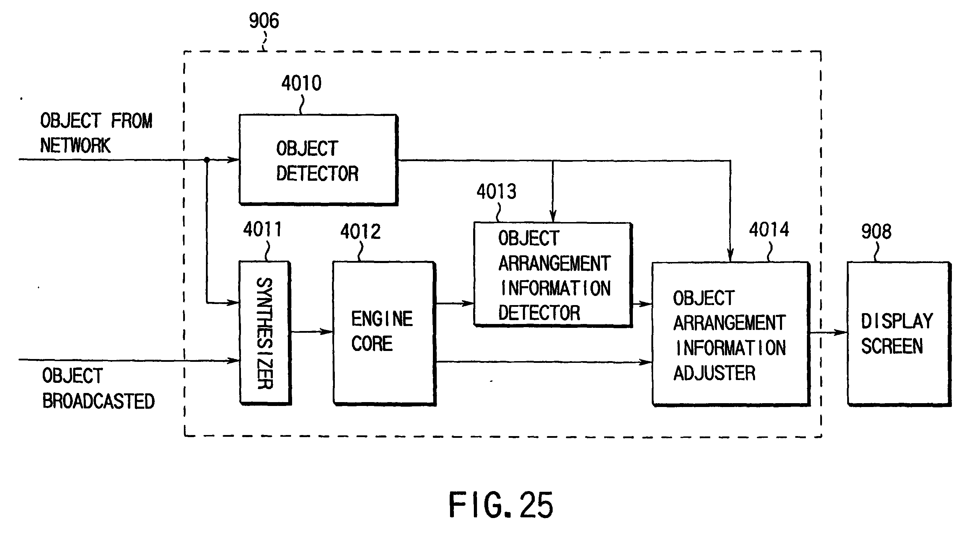

FIG. 25 extracts and shows the function of adjusting the GUI arrangement of the object in the engine 906. The object transmitted from the network device is supplied to an object detector 4010, the object detector 4010 responds to the input to create an icon of a corresponding network device and graphics which are an image for operation and transmit the same to an object arrangement information detector 4013 and object arrangement adjuster 4014 so as to display that the corresponding network device becomes active on the screen.

Further, the object is also supplied to a synthesizer 4011 and synthesized with the object transmitted via radio wave broadcasting or the like. In this example, the object is transmitted via radio wave broadcasting and synthesized, but the object transmitted via radio wave broadcasting is not always necessary and there occurs no special problem even if the object is transmitted only from the network device. The synthesizer 4011 transmits the synthesized object to an engine core 4012 in which the object is adequately processed and which transmits a GUI to the object arrangement information detector 4013 and object arrangement adjuster 4014.

The object arrangement information detector 4013 detects the position, size and the like of the GUI now dealt with and transmits the data to the object arrangement adjuster 4014. The object arrangement adjuster 4014 adjusts the position, size and the like of the GUI object by taking into consideration the data from the object arrangement information detector 4013 and the arrangement condition of the GUI previously set or specified by the user and transmits the same to the display screen 908.

An actual example of the above case is explained below.

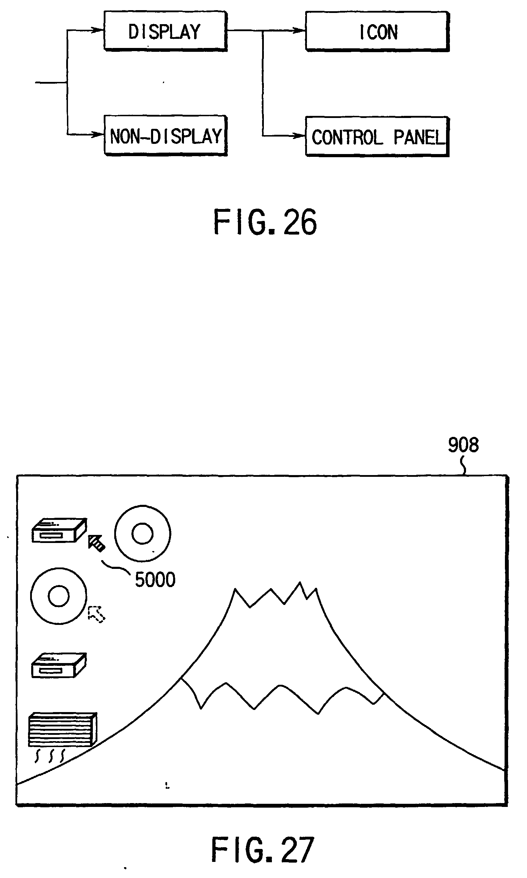

FIG. 26 shows the concept of a form of GUI on the actual display screen. The GUI created based on the object is not always displayed on the screen and set into two states of "display" and "non-display". In a state where the system becomes active, it is assumed that the non-display state is set. It is assumed that GUIs of the objects of all of the devices on the network at a certain time point are set to the same states for the two states. The two states of "display" and "non-display" may be set in a toggle manner by use of a button of an attached remote control unit or the like or control panel of the main body of the receiving device 900.

The representation of the GUI set in the display state has two ways; the form of "icon" and the form of "control panel". It is assumed that the display state when the system is made active is the icon form. Further, it is possible to set the icon form when the non-display state is changed to the display state.

The GUI of each object can have an independent display state (icon/control panel). When the display state of the GUI is set into the non-display state, the display state (icon/control panel), display position, display size and the like of the GUI of each network device displayed so far are all stored in the engine 906 and the original state is displayed based on the information items when the display state is set again. They are effective even when the power supply of the receiving device 900 is turned OFF. When the receiving device 900 is made active again, the previous state is displayed for the device which has been connected before and is kept active now.

FIG. 27 shows a display example of the icons. The icons are sequentially arranged from the upper left corner to the lower left corner on the display screen 908. When the lowest end is reached, they are shifted to the right by one column and arranged from the top to the bottom. Then, the same arrangement is repeated. For movement of the focus between the icons, a cursor 5000 is used. The cursor 5000 discretely moves between the icons. The ON/OFF operation of the icon is determined by depressing the determination button after moving the cursor 5000 and selecting the icon.

It is possible to classify the arrangement conditions of the GUI of the object according to a preset classification (for example, the classification for each device such as VTR, display, DVD, the classification for each function of the recording device, reproducing device or the like) and sequentially display them.

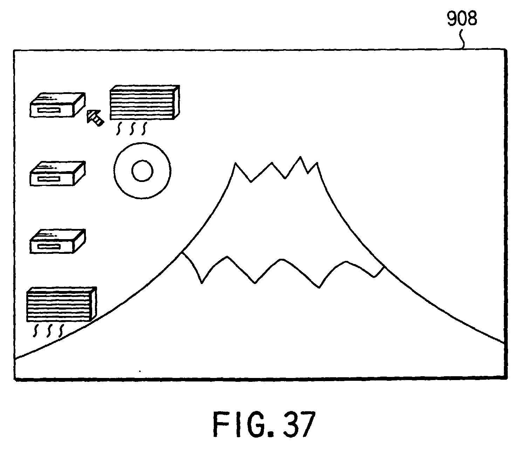

FIG. 37 shows an example in which they are classified for each device and displayed. They are sequentially arranged for each classification from the upper left corner to the lower left corner on the display screen 908. The classification at the time of display is previously set and if the user can selectively change the classification, it will be more convenient. Since they are thus sequentially and separately arranged for each classification, the user can easily select a desired icon from the GUI.

Further, it is possible to previously set a GUI of a given network device so as to be prevented from being displayed. By doing so, since the icons are not displayed on a device which the user will not control by use of the display screen 908, only the necessary icons can be displayed and it becomes easier to select the icon and the usability thereof is improved. The sequential display for each classification can be applied to all of the embodiments described below.

For the GUI of the receiving device 900 itself, the GUI can be displayed as one of the network devices like another network device or it may not be displayed. When the GUI is displayed for itself, the same operation environment can be realized. Further, when the GUI is not displayed for itself, it can be directly controlled without selecting the GUI by use of a remote controller or the like.

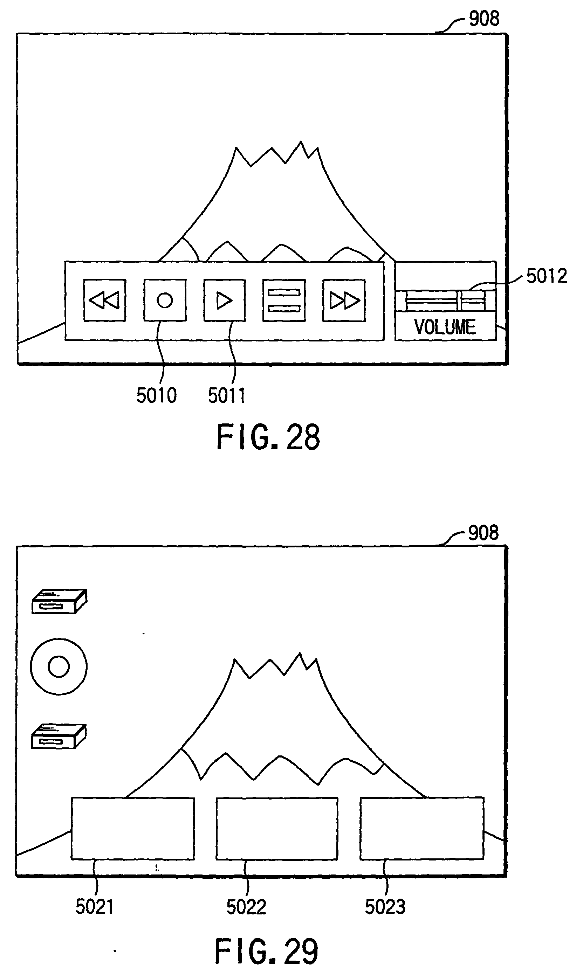

FIG. 28 shows an example of the control panel. The control panel provides a GUI to control the device. On the display screen 908 of the receiving device 900, a stop button 5010, play button 5011 and the like are displayed and by selecting the button by use of the cursor, for example, and performing the determination operation, it becomes possible to transmit the determined control instruction to the network device of the transmission source of the control panel. Further, a sliding-type voice volume 5012 is also displayed to provide a function of adjusting the volume of voice of the network device of the transmission source. The GUIs utilize images of bitmaps or some graphic drawing languages. Although not shown in the drawing, for movement between a plurality of control panels, a system for movement/determination by use of the cursor is used in the same manner as in the rule of the icon and movement/determination of the button in the control panel is made in the same manner.

At the display time of the control panel, if the network device of the control panel performs the play operation, for example, the frame of the play button 5011 becomes red and is displayed so that it can be determined to be now set in the play state. At this time, if the cursor is moved to the stop button 5010 and fixed thereon to stop the device operation, the frame of the stop button 5010 becomes red, indicating that the stop operation is set. Further, likewise, the function of adjusting the volume of voice is displayed such that the slide is set in the position corresponding to the present volume of voice. They can be realized by transmitting the operation of the network device from the network device to the network. Further, in the network to which two receiving devices 900 are connected, a problem occurs if different operations are simultaneously required for the same device from the two receiving devices 900. In order to prevent occurrence of such a case, it is satisfactory if the order of priority may be previously given to the two receiving devices 900 or the control panel cannot be simultaneously displayed on a plurality of receiving devices 900 with respect to a network device.

Further, by inserting and displaying the GUI of the network device in the control panel, it becomes possible to know the GUI of what one of the network devices and prevent an erroneous device from being controlled. The above operation can be applied to all of the embodiments described below.

FIGS. 29 to 32 show examples in which the control panels and icons are simultaneously displayed.

In the example of FIG. 29, the arrangement and size of the control panels 5021, 5022, 5023 are set and they are arranged in the horizontal direction from the lower left portion of the screen to the right so that they will not overlap each other and the positions of the icons. Further, if the lowest row is filled, they are arranged on a row shifted upwardly by one step. After this drawing, only the frames that are drawn as the control panels are simply drawn in a simplified form, and actually, the control panels corresponding to the network devices as shown in FIG. 28 are displayed.

Whether the icon corresponding to the control panel is continuously displayed on the display screen 908 or vanished after the control panel is displayed is not important. If it is continuously displayed, the control panel of what one of the icons can be clearly determined by setting the colors of the background of the surrounding of the icon (for example, a line fringing the surrounding of the icon) and the background of the control panel to the same color. Further, if the icon is continuously displayed even after the control panel is displayed, it is possible to determine that the control panel is already displayed by use of the icon by deforming the shape of the displayed icon or changing the background color.

On the other hand, since the display screen 908 becomes difficult to be filled with the icons and control panels if it is to be vanished, the user can sufficiently look at the image displayed behind the icon/control panel and effectively use the display screen 908. The embodiment in which the icon corresponding to the control panel is thus vanished from the display screen when the control panel is displayed can be applied to all of the embodiments described below.

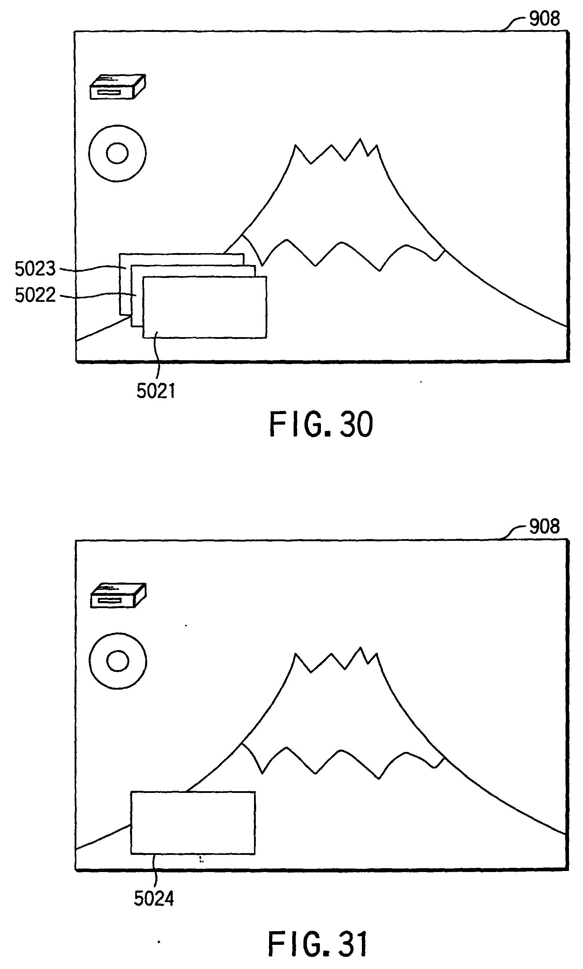

The example of FIG. 30 is an example in which a plurality of control panels 5021, 5022, 5023 are permitted to overlap each other. The control panels 5021, 5022, 5023 are overlapped on each other while they are slightly shifted from each other and displayed in the lower left portion of the display screen. The concealed control panels 5022, 5023 can be displayed in the front position by clicking the visible portion thereof and the focus can be put on a target control panel.

The example of FIG. 31 is an example in which only one control panel 5024 is always permitted to be displayed and the other control panels are displayed in an icon form. If one of the icons is selected, the control panel 5024 corresponding to the selected icon is displayed in the lower left portion of the screen, the focus is put thereon, the control panel which is now displayed is converted to an icon form, and thus the control panels are changed. The state of the control panel is automatically changed to an icon when time in which a new control process by the user is not effected exceeds a preset period of time (for example, five minutes). As a result, it becomes possible to prevent an erroneous control operation of the control panel when the remote controller or the like is erroneously operated.

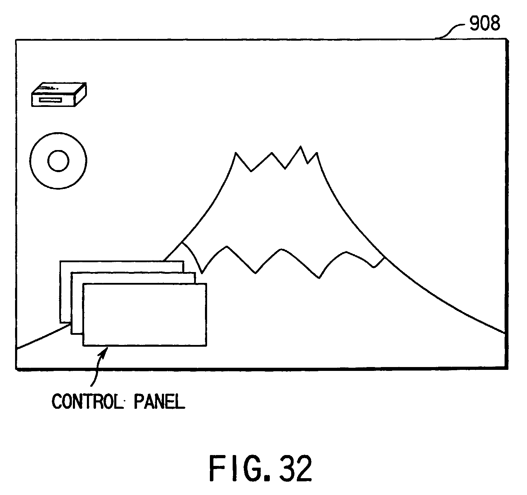

The example of FIG. 32 is an example in which a maximum number n of control panels are permitted to be displayed. If an icon is selected and the icon state is released in a state where control panels of a number less than n are displayed, a control panel corresponding to the icon is displayed as a new control panel as shown in FIG. 29 or 30. Further, if the user selects an icon and releases the icon state in a state where control panels of a number less than n are displayed, one control panel is selected from the already displayed control panels as in the example of FIG. 31, an icon corresponding to the control panel is displayed and the focus is put on the control panel displayed in the front portion as a new control panel.

As a method for selecting a control panel which is converted to an icon form from the already displayed control panels, the following methods which are not shown in the drawing can be provided.
1. (n-1) control panels which are most recently displayed and a newly selected control panel are displayed.
2. (n-1) control panels which are most recently used, that is, in which commands are used and a newly selected control panel are displayed.
3. (n-1) control panels which are not most recently used among those which are now displayed and a newly selected control panel are displayed.

The position and size of each control panel are freely controlled by interaction of the user. Further, the shape or the like of a component such as a button constructing the control panel can be freely changed by replacing the bitmap, for example.

Although not shown in the drawing, in a case where a network device cannot be used because the power supply is turned OFF, a corresponding GUI (icon or control panel) is removed from the display screen and a message indicating that it cannot be used is displayed for a preset period of time on the display screen 908.

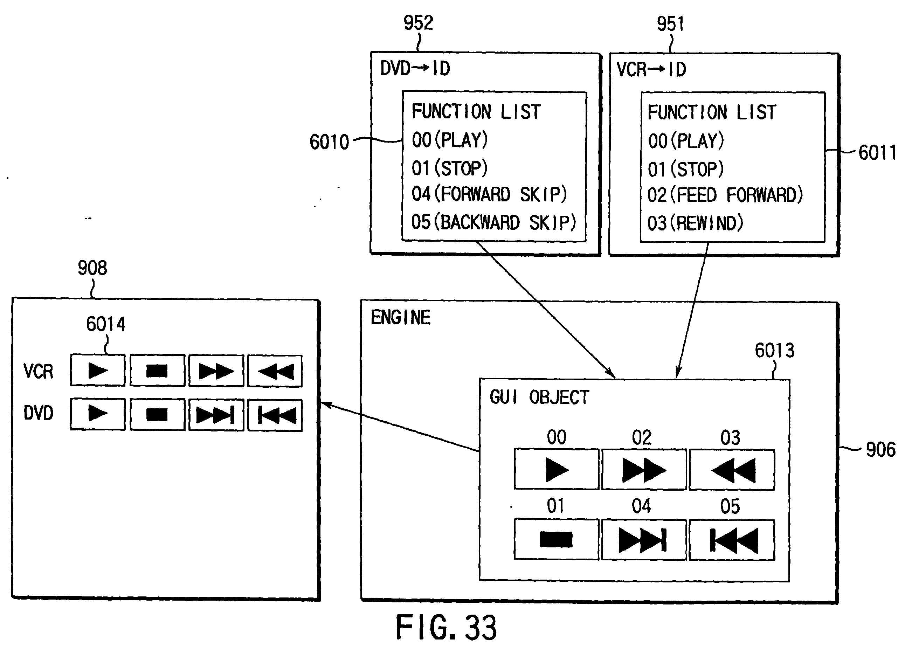

Another embodiment of this invention is explained with reference to FIG. 33. The network devices, for example, a DVD player 952 and VTR 951 are connected to an engine 906 via the network such as IEEE1394 as described above. In this case, in the above-described example, it is assumed that the objects for display of the icons and control panels are stored in the respective network devices. However, this is not limitative and various methods can be effected.

For example, the DVD 952 has a function list 6010 together with its own ID therein and, for example, four types of functions "Play", "Stop", "Forward Skip", "Backward Skip" are respectively coded into "00", "01", "04", "05" and held therein. Likewise, a VCR (video cassette recorder, or VTR : video tape recorder) 951 has a function list 6011 together with its own ID therein and functions "Play", "Stop", "Feed Forward", "Rewind" are respectively coded into "00", "01", "02", "03" and stored therein.

A GUI object 6013 corresponding to the functions is stored in the engine 906 and the engine 906 displays GUIs corresponding to the functions of DVD and VCR known by referring to the function list.

On the display screen 908, for example, if a GUI (button) 6014 corresponding to "Play" of the VCR 951 is depressed by the user, the engine 905 transmits a command "00" (Play) to the VCR 951 via the network such as IEEE1394.

With the above construction, the memory can be saved on the network device in comparison with a case wherein the network devices such as the DVD 952, VCR 951 hold GUI objects and it becomes possible to prevent the functions having the same meaning (for example, "Play" of VCR and "Play" of DVD) from becoming different GUIs on the screen. That is, the uniformity of meanings of symbols (GUI) for the user can be attained.

Further, the mutual connection can be assured by commonly using the numbers indicating the functions shown in the drawing and the referring method for all of the engines, network devices.

In the prior art case, it is rare to effect the control operation of domestic devices in the house by use of the control buttons, control panels attached to the main bodies thereof and it is general to control them by use of discrete exclusive remote control units attached thereto. However, each remote control unit is particularly designed to control the main body thereof and it cannot be used to control the other device in many cases. For example, even if one remote control unit can be used to control another device, functions which can be realized are limited to general functions and the control process inherent to the device cannot be effected in many cases. Further, if each device is connected to a screen display device such as a TV by use of a video cable or the like, the GUI of the device can be displayed on the display device. However, the relation between each GUI and similar GUI displayed on the other device is not taken into consideration in many cases and a state where the GUIs overlap on each other on the screen of the display device and become difficult to see occurs in some cases.

However, the above problem can be solved according to this invention. This invention is not limited to the above embodiments.

Even when the form of event and the handling method thereof are different, the engine is designed to respond to the event. A data converter for realizing this is explained below.

First, in order to understand that data conversion is necessary, the forms of events and the handling method thereof in an execution system 1 (first engine system) and execution system 2 (second engine system) are explained.

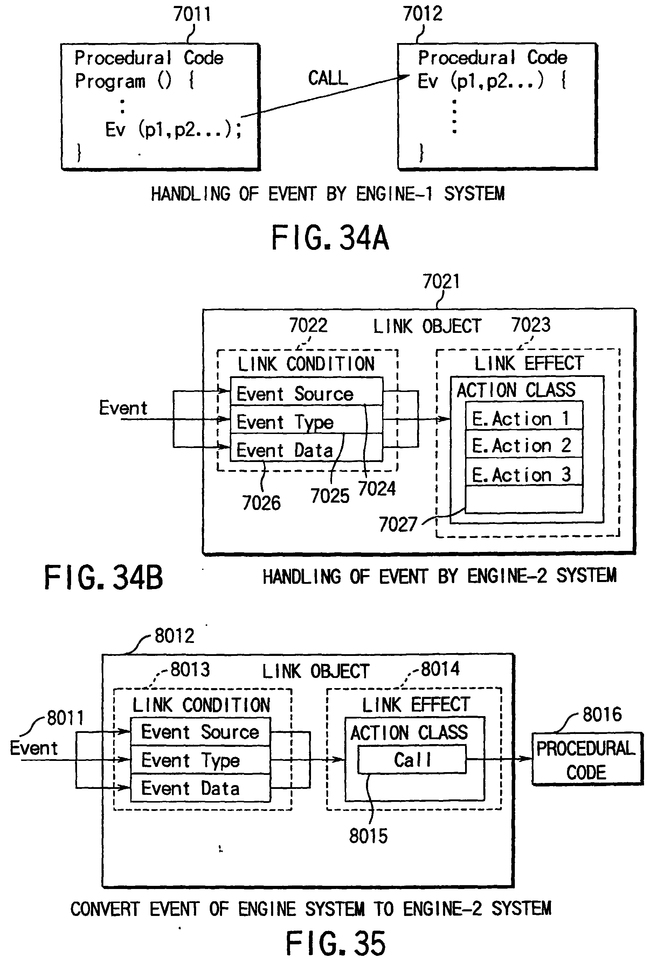

FIG. 34A shows an event handling method in the execution system 1 (which is called a first engine system) by the first engine and an event is directly associated with a call of a procedural code. The procedural code is a program executed on the virtual machine (VM) 909 of FIG. 22 and, for example, a program described by use of a computer language such as BASIC or Java can be used.

In the execution system 1, occurrence of an event and a call of the procedural code are equivalent. In the drawing, a case where a procedural code 7012 having a name of Ev among a procedural code 7011 having a name of program is called is shown as an example, but the calling operation corresponds to the event. At the time of call, it is permitted to supply data as arguments, and in the drawing, p1, p2 are supplied. In this case, event data items p1, p2 are attached to the event. In execution of the application, the event is used to start various operations in the application and change the state of each object constructing the application. For example, an even occurs to indicate that certain time is reached, event data attached thereto is time data, for example, and is supplied to effect a process corresponding to the time in the called procedural code.

FIG. 34B shows an event handling method in the execution system 2 (second engine system) by the second engine. The role of the event and the method for using the event are the same as in the case of the execution system 1 described above and data can be attached in the same manner as in the execution system 1, but it is different from the execution system 1 in that the event is dealt with as a message transmitted from an object to an object and the event has a type. The type of the event is used to indicate why the event has occurred and, for example, it is used to identify "certain time is reached", "a certain button is depressed" or the like.

The event in the execution system 2 cannot directly call the procedural code 7012 as in the event of the execution system 1 and is always supplied to a link object 7021. The link object 7021 is a type of object constructing the application of the second engine system.

A link condition 7022 is to describe the condition for the received event and is constructed by an event source 7024, event type 7025, event data 7026.

If the link object 7021 receives the event, the event generating source (transmission source object) and the event source 7024, the type of the event and the event type 7025, the attached data and the event data 7026 are compared with each other. As a result, for example, the method (data) of depressing one of the buttons (type) of one of the icons (source) is indicated.

As the result of comparison, if non-coincidence is detected, the operation relating to the event is terminated. If all of them coincide, a link effect 7023 is started. The link effect 7023 is an arrangement of elementary actions 7027. As a concrete example of the elementary action, a send event for sending an event to another object and a call for calling a procedural code are provided.

Since the forms of the events and the handling methods thereof are different in the execution system 1 and execution system 2 as described before, it is impossible to directly convert the application of the execution system 1 to the application of the execution system 2.

However, in this invention, as shown in FIG. 35, it is designed to create a set of an event 8011 of the execution system 2 and a link object 8012 from the event of the execution system 1 which is a call of the procedural call. The condition which is always satisfied by the event 8011 is described in a link condition 8013 of the link object 8012. Then, by describing an elementary action 8015 (Call) for calling a procedural code 8016 in a link effect 8014, an operation equivalent to the operation of executing the procedural code by the event of the execution system 1 is realized by the execution system 2.

By realizing the above process, the event of the execution system 1 can be coped with even if the main body is a type of the execution system 2.

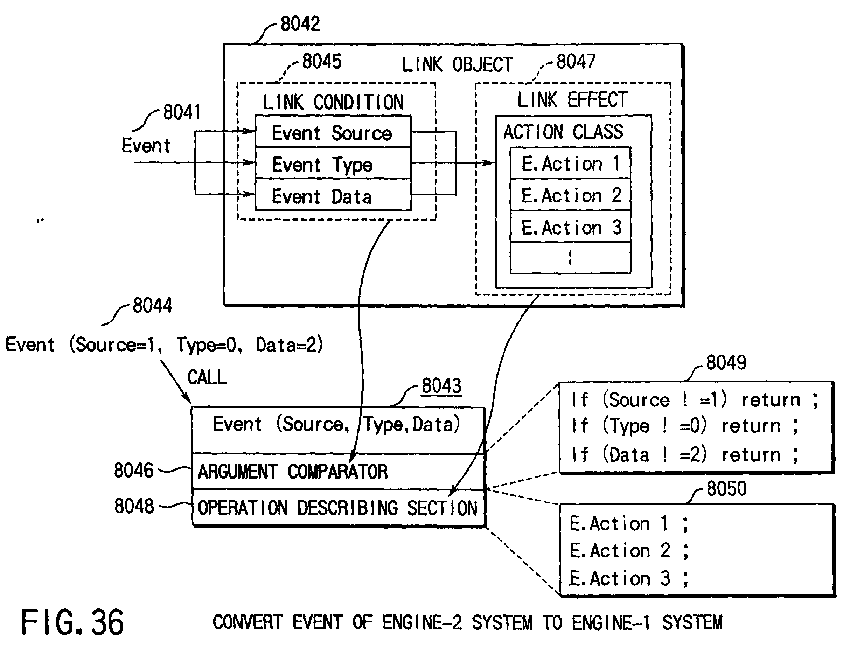

Next, the handling method of the event in a case where the application of the execution system 2 is converted to the application of the execution system 1 is explained with reference to FIG. 36. That is, the handling method of the event in a case where the event of the execution system 2 is input while the main body corresponds to the type of the execution system 1 is explained.

In the execution system 2, an event 8041 accompanied by a type and attached data is input to a link object 8042, and an event 8044 for calling in the execution system 1 is created as that corresponding to the event 8041. The event 8044 has a source indicating a place where it is generated, the type and attached data as arguments. The event 8044 functions to call a procedural code 8043. That is, the event 8044 having arguments corresponding to the event 8041 is generated. For example, the arguments are converted to arguments of Source = 1, Type = 0, Data = 2 as shown in the drawing.

Next, the procedural code 8043 is constructed as an argument comparing section 8046 for determining the condition described in a link condition 8045 of the execution system 2 and an operation describing section 8048 for realizing the operation described in a link effect 8047 of the second engine.

As a realizing method of the argument comparing section 8046, the description by a condition branching syntax as shown by a code 8049 in FIG. 36 is provided in the case of the example shown in the drawing. For example, they are as follows.
IF (Source ! = 1) return
   (if the source is not 1, return)
IF (Type ! = 0) return
   (if the type is not 0, return)
IF (Source ! = 1) return
   (if data is not 2, return)

By thus describing, if the conditions coincide (Source = 1, Type = 0, Data = 2), it passes through the argument comparing section 8046 and is supplied to the operation describing section 8048. As a result, actions 1, 2, 3 corresponding to the conditions of Source = 1, Type = 0, Data = 2 are executed. The execution is realized by previously creating codes (execution system 1) equivalent to respective elementary actions (actions ; execution system 2) and arranging them as shown by a symbol 8050 in FIG. 36.

FIG. 37 shows another example in which an icon due to a graphical user interface object (GUI object) is displayed in a case where various network devices are connected to the receiving device (that is, control device) via the network and the same type of devices are present. In this case, if the same type of network devices are present, the icons thereof are displayed in close positions.

As described above, in this invention, the equivalent action can be realized by creating the procedural code for effecting the action equivalent to the link object for the execution system 1.

As described above, according to this invention, the features described after the following numbers are provided.
(1) In a device for transmitting an application to be executed as an image, voice, data corresponding to one or a plurality of signal transmission systems, elements constituting the application are divided into basic common data commonly used by different television systems having interactive functions and discrete data individually used by different signal transmission systems and transmitted.
(2) Further, in a device for receiving a signal transmitted from the signal transmission system, the application is executed by use of only the common data, or the application is executed by receiving an output of the signal transmission device and synthesizing the common data and the discrete data corresponding to its own system, or the application is executed by receiving an output of the signal transmission device and synthesizing the common data, the discrete data corresponding to its own system and the discrete data corresponding to at least one system different from its own system.
(3) The common data and discrete data have objects in which the construction of the application is described, contents encoded according to a preset coding system and the type of data of a script in which the control operation is described.
(4) The discrete data basically includes auxiliary data which is detail information insufficient for the common data, inherent to each individual television system and basically having the property of the common data and independent data which is script and contents data items which do not basically have the property of the common data.
(5) Each data unit belonging to the three types of data of the common data has a first identifier for identifying itself.
(6) Further, each data unit belonging to the three types of data of the discrete data has a second identifier for knowing common data having its own basic property.
(7) Further, the second identifier which is inherent data and belongs to the data unit is associated with the first identifier of the data unit of the type of fourth data such as blank data and it is designed to have expandability with respect to transmission/reception of a further different system. That is, blank common data is provided in a system which has no common data so as to provide the expandability.
(8) Further, the common data has only the first identifier for identifying itself. That is, if it is blank common data and the first identifier is provided in itself, it is not necessary to have an identifier for the object and script.
(9) Further, when the common data and discrete are synthesized, the script, contents of inherent data of the discrete data are dealt with as the effective components, the first identifier of the common data (blank common data) of the type of the fourth data is dealt with as an effective component, and they are synthesized.
(10) It is characterized in that the discrete data includes auxiliary data which is detail information insufficient for the common data, inherent to individual television systems and basically having the property of the common data and independent data which is script and contents data items which do not basically have the property of the common data, the data unit of the auxiliary data of the discrete data has a second identifier for knowing common data having its own basic property and the data unit of the inherent data thereof has a first identifier for identifying itself.
(11) The second identifier has the same values as the first identifier of the data unit of the common data having the basic property of the data unit to which it belongs so that the relation between the common data and discrete data can be grasped.
(12) The common data is created from an application group created by a plurality of different television systems based on a rule that it is made independent from any of the television systems.
(13) Creation of auxiliary data which is detail information insufficient for the common data, inherent to individual television systems and basically having the property of the common data and synthesis thereof with the common data are effected based on the class succession technology of the object-oriented technology.
(14) The object in which the basic construction of the application is described is constructed by a visible object displayed on the screen at the execution time, an invisible object which is not displayed on the screen, an object having a large-scale property for controlling the whole application, and an object having an internal property for controlling between the objects.
(15) The object belonging to the common data has an identifier for identifying the object, an identifier indicating the type of the object, an identifier for specifying data contents, and an identifier for specifying a script. Further, the contents belonging to the common data have an identifier for identifying the contents and an identifier for identifying the type of the contents. Further, the script belonging to the common data has an identifier for identifying the script and an identifier for identifying the type of the script.
(16) Means is provided for receiving first discrete data for an application adaptable to the first television system and first common data, creating second discrete data necessary for an application of the second television system by converting the first discrete data, and executing an application adaptable to the second television system by use of the second discrete data and first common data.
(17) Common data and discrete data 1 are created by use of an application created in the first television system, discrete data 2 necessary for an application of the second television system is created by converting the discrete data 1, and the common data, discrete data 1 and discrete data 2 can be transmitted.
(18) Conversion of the discrete data is effected between two or more television systems.
(19) Conversion of the discrete data has a feature that discrete data for one television system is created from discrete data items for a plurality of television systems. Further, conversion of the discrete data has a feature that discrete data items for a plurality of television systems are created from discrete data for one television system. Further, conversion of the discrete data has a feature that discrete data for one television system is created from discrete data items for a plurality of television systems.
(20) Common data and discrete data are created from an application group created by a plurality of different television systems based on a rule that they are independent from any of the television systems.
(21) A signal receiving device which is a receiving device for receiving a signal from at least one device having a function of transmitting data corresponding to a format which can be converted to a different system having an interactive function and used for operating itself and a signal from a signal transmitting device for dividing elements constituting an application to be executed into basic common data commonly used in different systems having the interactive functions and discrete data respectively and individually used in the different systems and transmitting them when the application is transmitted as an image, voice, data corresponding to one or a plurality of systems and which is characterized in that it executes the application by use of one of the common data, data corresponding to the convertible format, discrete data or synthesized data of at least one of the above data items.
(22) Data for controlling the transmitter which is a transmission source of the data can be transmitted as the result of execution of the application using data corresponding to the convertible format.
(23) The common data is described according to the format of data corresponding to the convertible format.
(24) In a converter which is the device described in (21) and used for converting an application of a second engine system for performing an operation indicated by the operation description only when an event is input to a link object constructed by an operating condition and the operation description and the event satisfies the operating condition into an application of a first engine system in which occurrence of the event and execution of a procedural code are equivalent, it comprises event converting means for converting the event of the second engine system to a call of the procedural code of the first engine system which deals with data attached to the event as an argument, operating condition converting means for converting the operating condition of the link object of the second engine system to an argument comparing section in the procedural code which is an object of the call, and operation description converting means for converting the operation description in the ling object to an operation describing section in the procedural code.
(25) The argument comparing section uses the operating condition in the link object of the second engine system as a determination condition and determines whether the condition is satisfied or not by comparing the condition with the data contents supplied as an argument.
(26) The operation describing section in the procedural code is described so that the operation equivalent to the operation description in the link object of the second engine system can be effected on the first engine.
(27) The operation description converting means creates the operation describing section by previously creating procedural codes equivalent to part or all of descriptions which can be dealt with as constituents of the operation descriptions in the link object of the second engine system and referring to them.
(28) In a converter which is the device described in (21) and used for converting an application of a first engine system in which occurrence of the event and execution of a procedural code are equivalent into an application of a second engine system for performing an operation indicated by the operation description only when the event is input to a link object constructed by an operating condition and the operation description and the event satisfies the operating condition, it is characterized in that the event of the first engine system is converted to a set of the link object and the event of the second engine system.
(29) When the set of the link object and the event of the second engine system of (28) is created, the link object is constructed by an operating condition which is always satisfied and an operation description for calling a procedural code.
(30) In the device of (21), each network device holds a list of functions which it has and the engine has means for referring to list data and detecting the type of an operation which can be effected for each device.
(31) In (30), it is characterized in that reference by the engine to the list of functions held by each network device is made by use of a preset interface irrespective of the type of the engine.
(32) It is characterized in that, in (30), the engine has graphical user interface (GUI) objects corresponding to the functions held by the network device, presents the same for the functions held by the network device to the user on the display screen, and performs the operation of the user for the presented GUI object with respect to the network device.
(33) The device described in (21) is characterized in that it has means for adjusting the relative arrangement relation between graphical user interfaces of data used for operating itself.
(34) It is characterized in that, as means for realizing the device of (33), means for detecting that data is newly received and transmitting graphics indicating that it is detected, means for detecting the position, size of the graphical user interface of synthesized data and means for adjusting the arrangement of the graphical user interfaces based on the information are provided.

As described above, according to this invention, a device for attaining the compatibility for interactive systems independently developed can be provided.

Further, inherent control information items are previously stored in the respective devices, the information items are collectively managed and the unified control operation can be performed. Further, by taking it into consideration that data is transferred in the radio wave broadcasting such as digital television broadcast, unified adjustment of the screen display of the GUI objects thereof and GUI for controlling the devices can also be made.

### Industrial Applicability

This invention can be used in the field of a terminal device, control device, transmitting and receiving device on the network and also used in a radio communication system. Further, it can be used as a device used for corporations or for commercial, domestic or personal use.

## Claims

1. A control device for controlling network devices constructing a network via the network, characterized by comprising:
an input terminal to which first control information used for controlling the network device itself is input from the network device via the network;
operation image creating means for creating an operation image used by the user for controlling the network device by use of the first control information from said input terminal;
control information creating means for creating second control information for controlling the network device in response to the operation of the user for the operation image; and
an output terminal for outputting the second control information to the network device via the network.

2. A control device for controlling network devices constructing a network via the network, characterized by comprising:
an input terminal to which function information indicating functions which the network device has is input from the network device via the network;
an image memory for previously storing image information corresponding to the functions;
operation image creating means for creating an operation image used by the user for controlling the network device by use of the function information and image information;
control information creating means for creating second control information for controlling the network device in response to the operation of the user for the operation image; and
an output terminal for outputting the second control information to the network device via the network.

3. A control device for controlling network devices constructing a network via the network, characterized by comprising:
an input terminal to which first control information used for controlling the network device itself and function information indicating functions associated with the first control information are input from the network device via the network;
an image memory for previously storing image information corresponding to the functions;
operation image creating means for creating an operation image used by the user for controlling the network device by use of the function information and image information;
control information creating means for creating second control information for controlling the network device in response to the operation of the user for the operation image; and
an output terminal for outputting the second control information to the network device via the network.

4. The control device according to claim 1 or 3, characterized in that the first control information contains image information for creating the operation image and the second control information.

5. A control device for controlling network devices constructing a network via the network, characterized by comprising:
an input terminal to which first control information used for controlling the network device itself and image information associated with the first control information are input from the network device via the network;
operation image creating means for creating an operation image used by the user for controlling the network device by use of the image information;
control information creating means for creating second control information for controlling the network device by use of the first control information in response to the operation of the user for the operation image; and
an output terminal for outputting the second control information to the network device via the network.

6. The control device according to claim 5, characterized by comprising recording means for recording the first control information and image information.

7. A control device for controlling network devices constructing a network via the network, characterized by comprising:
an input terminal to which first control information used for controlling the network device itself and function information indicating functions associated with the first control information are input from the network device via the network;
an image memory for previously storing image information corresponding to the functions;
operation image creating means for creating an operation image used by the user for operating the network device by use of the function information and image information corresponding to the function information and stored in said memory means;
control information creating means for creating second control information for controlling the network device by use of the first control information in response to the operation of the user for the operation image; and
an output terminal for outputting the second control information to the network device via the network.

8. The control device according to claim 7, characterized by comprising recording means for recording the first control information.

9. The control device according to claim 5 or 7, characterized in that said control information creating means creates the second control information by extracting part of the first control information.

10. A control device for controlling network devices constructing a network via the network, characterized by comprising:
an input terminal to which three information items containing first control information used for controlling the network device itself, image information associated with the first control information and icon image information associated with the network device itself are input from the network device via the network;
display image creating means for creating a display image which contains icon images of the network devices connected to the network and in which the user can select the icon image by use of the icon image information;
operation image creating means for creating an operation image used by the user for controlling the selected network by use of the image information of the network device associated with the selected icon image when the icon image arranged on the display image is selected by the user;
control information creating means for creating second control information for controlling the network device in response to the operation of the user for the operation image; and
an output terminal for outputting the second control information to the network device via the network.

11. The control device according to claim 10, characterized in that said operation image creating means can change a display method of the operation image according to the operating state of the network device.

12. The control device according to claim 10, characterized in that said operation image creating means does not display the icon image of the network device corresponding to the operation image on the display image when the operation image is displayed.

13. The control device according to claim 10, characterized in that said display image creating means displays the icon images in order for each preset classification.

14. The control device according to claim 10, characterized in that said display image creating means does not display the icon images of a preset network device on the display image.

15. The control device according to claim 10, characterized in that said display image creating means creates a display image indicating that the network device becomes unusable for a preset period of time when the network device which has been usable becomes unusable.

16. The control device according to claim 10, characterized in that one of the image information and icon image information contains at least one of bitmap data and graphic drawing language data.

17. The control device according to claim 10, characterized by comprising recording means for recording the first control information, image information, icon image information from said input terminal.

18. The control device according to claim 10, characterized in that the operation image is automatically changed into an icon image of the network device corresponding to the operation image when a period of time in which the user does not newly perform the operation is kept for a preset period of time.

19. The control device according to claim 10, characterized in that said display image creating means creates icon images of network devices connected to the network by use of the icon image information and creates a display image such that the icon images are arranged in order in a direction from one corner portion of the display image to a different corner portion.

20. A control device for controlling network devices constructing a network via the network, characterized by comprising:
an input terminal to which first control information used for controlling the network device itself and image information associated with the first control information are input from the network device via the network;
operation image creating means for creating an operation image used by the user for controlling the network device by use of the image information;
adjusting means for adjusting at least one of the arrangement and size of the operation image to create a display image to be displayed on a display;
control information creating means for creating second control information for controlling the network device by use of the first control information in response to the operation of the user for the operation image; and
an output terminal for outputting the second control information to the network device via the network.

21. A control device for controlling network devices constructing a network via the network, characterized by comprising:
an input terminal to which first control information used for controlling the network device itself and function information indicating functions associated with the first control information are input from the network device via the network;
an image memory for previously storing image information corresponding to the functions;
operation image creating means for creating an operation image used by the user for operating the network device by use of the function information and the image information corresponding to the function information and stored in said image memory;
adjusting means for adjusting at least one of the arrangement and size of the operation image to create a display image to be displayed on a display;
control information creating means for creating second control information for controlling the network device by use of the first control information in response to the operation of the user for the operation image; and
an output terminal for outputting the second control information to the network device via the network.

22. The control device according to claim 20 or 21, characterized in that said adjusting means makes the adjustment based on a preset condition.

23. The control device according to claim 20 or 21, characterized in that said adjusting means makes the adjustment according to the number of operation images displayed on the display image.

24. The control device according to any one of claims 1, 3, 5 to 8, 20 and 21, characterized in that the image information contains at least one of bitmap data and graphic drawing language data.

25. The control device according to any one of claims 1 to 3, 5, 7 and 10, characterized by comprising display means for displaying the operation image.

26. The control device according to claim 25, characterized by comprising changeover means for changing a state where the operation image is displayed on said display means or not.

27. The control device according to any one of claims 1 to 3, 5, 7 and 10, characterized in that the specification of the network corresponds to IEEE1394.

28. The control device according to claim 7 or 21, characterized in that the function information is information indicating a list of functions.

29. A network device constructing a network, characterized by comprising:
storing means for storing control information for controlling itself; and
outputting means for outputting the control information to a different network device via the network; and
characterized in that it performs an operation corresponding to input control information when the control information is input from said different network device.

30. A network device constructing a network, characterized by comprising:
storing means for storing control information for controlling itself and image information for creating an operation image used by the user for selecting the control information; and
outputting means for outputting the control information and image information to a different network device via the network; and
characterized in that it performs an operation corresponding to input control information when the control information is input from said different network device.

31. A network device constructing a network, characterized by comprising:
storing means for storing function information associated with functions which the device itself has; and
outputting means for outputting the function information to a different network device via the network; and
characterized in that it performs an operation corresponding to input control information when the control information associated with the function information and used for controlling itself is input from said different network device.

32. A network device constructing a network, characterized by comprising:
storing means for storing function information associated with functions which the device itself has and image information for creating an operation image used by the user for selecting the control information; and
outputting means for outputting the function information and image information to a different network device via the network; and
characterized in that it performs an operation corresponding to input control information when the control information associated with the function information and used for controlling itself is input from said different network device.

33. The network device according to any one of claims 29 to 32, characterized by comprising detecting means for detecting that it is connected to the network and characterized in that information from said storing means is output to said different network device according to the result of detection.

34. The network device according to claim 30 or 32, characterized in that the image information contains at least one of bitmap data and graphic drawing language data.

35. The network device according to claim 31 or 32, characterized in that the function information is information indicating a list of functions.

36. A signal transmitting device for transmitting an application to be executed as an image, voice, data corresponding to one or a plurality of systems, characterized in that elements constructing the application are divided into basic common data commonly used by different systems having interactive functions and discrete data individually used by different systems and transmitted.

37. A signal receiving device for receiving a signal from a signal transmitting device for dividing elements constructing an application to be executed into basic common data commonly used by different systems having interactive functions and discrete data individually used by different systems and transmitting them when the application is transmitted as an image, voice, data corresponding to one or a plurality of systems, characterized by comprising:
means for receiving an output of the signal transmitting device and using only the common data to execute the application, or receiving an output of the signal transmitting device and synthesizing the common data and the discrete data corresponding to its own system to execute the application, or receiving an output of the signal transmitting device and synthesizing the common data, the discrete data corresponding to its own system and the discrete data corresponding to at least one system different from its own system to execute the application.

38. The device according to claim 37, characterized in that the common data has types of data of an object in which the construction of the application is described, contents encoded according to a preset coding system and a script in which control operations are described.

39. The device according to claim 37, characterized in that the common data has only a first identifier for identifying itself.

40. The device according to claim 37, characterized in that the discrete data includes auxiliary data which is detail information insufficient for the common data, inherent to individual television systems and basically having the property of the common data and independent data which is script and contents data items which do not basically have the property of the common data, and the data unit of the auxiliary data of the discrete data has a second identifier for knowing common data having its own basic property and the data unit of the independent data has a first identifier for identifying itself.

41. The device according to claim 37, characterized by comprising means for receiving first common data and first discrete data for an application adaptable to a first system, creating second discrete data necessary for an application of a second system by converting the first discrete data, and executing the application adaptable to the second system by use of the second discrete data and first common data.

42. A recording medium characterized by dividing elements constructing an application executed on a display device into basic common data commonly used by different systems having interactive functions and discrete data individually used by different systems and defining them when the application is defined as an image, voice, data corresponding to one or a plurality of systems and multiplexing and recording the common data and discrete data in a packet form.

43. A signal receiving device characterized by comprising:
receiving means for receiving a signal from a signal transmitting device for dividing elements constructing an application to be executed into basic common data commonly used by different systems having interactive functions and discrete data individually used by the different systems and transmitting them when the application is transmitted as an image, voice, data corresponding to one or a plurality of systems and a signal from at least one device having a function of transmitting data according to a format which can be converted to a different system having the interactive function and containing data used for operating itself; and
execution means for executing the application by use of one of the common data, discrete data and data according to the convertible format or synthesized data of at least one data among the received data items.

44. The signal receiving device according to claim 43, characterized by comprising means for generating and transmitting data for controlling a device itself which is a transmission source of the data as the result of execution of the application by use of the data according to the convertible format.

45. The signal receiving device according to claim 44, characterized in that a network device which is the transmission source holds function data indicating functions owned by the network devices themselves and said execution means refers to the function data to control the network devices.

46. The signal receiving device according to claim 45, characterized in that the function data is referred to via a preset interface irrespective of the type of said execution means when said execution means refers to the function data owned by the network devices.

47. The signal receiving device according to claim 45, characterized in that the function data is referred to via a preset interface irrespective of the type of said engine when said engine refers to the function data owned by the network devices.

48. The signal receiving device according to claim 45, characterized in that said execution means holds graphical user interface (GUI) objects corresponding to the functions owned by the network devices and displays the GUI of the function owned by the network device on the display screen to permit the user to operate the network device via the GUI object.

49. The signal receiving device according to claim 45, characterized in that the GUI object is fetched from the network device.

50. The signal receiving device according to claim 45, characterized in that the GUI object is previously held in said execution means itself.

51. The signal receiving device according to claim 45, characterized by comprising means for adjusting the arrangement of GUIs to display the GUIs when a plurality of GUI objects used for operating the devices themselves are provided.

52. The signal receiving device according to claim 51, characterized in that said means for adjusting the arrangement of the GUIs adjusts the arrangement position on the screen while the relative arrangement relation of the plurality of objects already displayed is maintained.

53. The signal receiving device according to claim 51, characterized in that said means for adjusting the arrangement of the GUIs adjusts the arrangement position to display the same type of GUIs in close positions when GUI objects of the same type of devices are provided in the plurality of GUI objects.

54. The signal receiving device according to claim 51, characterized in that said means for adjusting the arrangement position of the GUIs generates graphics data indicating that new data is received when detecting that the new data is received.

55. The signal receiving device according to claim 51, characterized in that said means for adjusting the arrangement position of the GUIs generates graphics data indicating that new data is received when detecting that the new data is received.

56. The signal receiving device according to claim 51, characterized by comprising means for adjusting the arrangement and size of a plurality of GUIs based on information of the display position and size of a plurality of GUIs corresponding to synthesized data of a plurality of GUI objects.

57. The signal receiving device according to claim 43, characterized in that the common data is described according to the convertible format.

58. The signal receiving device according to claim 43, characterized by comprising event converting means for converting an event of the second engine system to a call of a procedure-oriented program of the first engine system having data attached to the event as an argument in a case where the event is input to a link object constructed by the operating condition and operation description and an application of the second engine for performing the operation indicated by the operation description only when the event satisfies the operating condition is converted to an application of the first engine system in which occurrence of an event and execution of the procedure-oriented program are equivalent; operating condition converting means for converting the operating condition constructing the link object of the second engine system to an argument comparing section in the procedure-oriented program which is an object of the call; and operation description converting means for converting the operation description in the ling object to an operation describing section in the procedure-oriented program.

59. The signal receiving device according to claim 58, characterized in that the argument comparing section uses the operating condition in the link object of the second engine system as a determination condition and determines whether the condition is satisfied or not by comparing the condition with data supplied as an argument of the procedure-oriented program containing the argument comparing section.

60. The signal receiving device according to claim 58, characterized in that the operation describing section of the procedure-oriented program is described so that the operation equivalent to the operation description in the link object of the second engine system can be effected on the first engine.

61. The signal receiving device according to claim 58, characterized in that said operation description converting means creates the operation describing section by previously creating a procedure-oriented program equivalent to part or all of descriptions which can be dealt with as constituents of the operation descriptions in the link object of the second engine system and referring to the procedure-oriented program thus created.

62. The signal receiving device according to claim 43, characterized by comprising means for converting an event of a first engine system to a set of the link object and an event of a second engine system in a case where an application of the first engine system in which occurrence of the event and execution of a procedure-oriented program are equivalent into an application of the second engine system for performing an operation indicated by the operation description only when an event is input to a link object constructed by an operating condition and the operation description and the event satisfies the operating condition.

63. The signal receiving device according to claim 62, characterized in that the link object to be created is constructed by an operating condition which is always satisfied and an operation description for calling a procedure-oriented program when the set of the link object and the event of the second engine system of is created.
